# EUROPÄISCHE PATENTSCHRIFT

(11) **EP 3 215 332 B1**
(45) Veröffentlichungstag und Bekanntmachung des Hinweises auf die Patenterteilung: **16.06.2021**
(21) Anmeldenummer: 15777876.2
(22) Anmeldetag: 01.10.2015
(51) Int. Cl.: B29B 7/84, B29B 7/86, B29B 13/00, B29C 48/76, B29B 7/46, B29B 7/72, B29B 7/82

(54) **PLASMA ABGASREINIGUNG**
PLASMA EXHAUST PURIFICATION
ÉLIMINATION DE GAZ RÉSIDUAIRES PAR PLASMA

(30) Priorität: 06.11.2014 DE 102014016380
(43) Veröffentlichungstag der Anmeldung: 13.09.2017
(73) Patentinhaber: Brückner Maschinenbau GmbH & Co. KG, 83313 Siegsdorf (DE)
(72) Erfinder: EISCH, Josef, 83317 Teisendorf (DE); AMBROSIUS-VOSS, Nicole, 81667 München (DE); SCHWUCHOW, Rainer, 83365 Nussdorf (DE); SEIBEL, STEFAN, 83435 Bad Reichenhall (DE)
(74) Vertreter: Flach Bauer Stahl Patentanwälte Partnerschaft mbB
(86) Internationale Anmeldenummer: PCT/EP2015/001939
(87) Internationale Veröffentlichungsnummer: WO 2016/070950

(56) Entgegenhaltungen:
- WO-A1-03/047727
- DE-A1-102007 056 610
- DE-A1-102007 056 610
- DE-A1-102013 000 316
- GB-A- 2 410 919
- GB-A- 2 410 919

## Beschreibung

Die vorliegende Erfindung betrifft ein Verfahren und eine Vorrichtung zum Entgasen von Polymerschmelzen und die Neutralisierung der dabei entstehenden Abgase

Bei der Herstellung von Erzeugnissen aus Polymeren werden häufig Extruder verwendet, um ein Kunststoffgranulat aufzuschmelzen, und - bei Bedarf entsprechender Eigenschaften des fertigen Kunststoffprodukts - mit ein oder mehreren flüssigen oder festen Additiven (z.B. Weichmachern, Gleitmitteln, Antistatikmitteln, usw.) zu versetzen und einer Extrusionsdüse zuzuführen. Die Temperaturen der Schmelze liegen dabei im Bereich zwischen 200°C und 300°C.

Die so entstandene Polymerschmelze beinhaltet in ihrem Inneren nach dem Aufschmelzen gasförmige Einschlüsse und flüssige Stoffe in Lösung, die das Fertigprodukt in seiner Qualität negativ beeinflussen würden, wenn die Schmelze in dieser Form verarbeitet werden würde. Bei der Herstellung von Kunststofffolien würden sich Einschlüsse sehr nachteilig bemerkbar machen. Daher schließt sich in der Plastifizierungseinheit meist im Anschluss an das Aufschmelzen des Kunststoffs und der Vermischung mit dem/den Additiv/en ein Entgasungsprozess in ein oder mehreren Vakuumzonen an, bevor die Schmelze über eine Austrageinheit ausgebracht wird.

Zu diesem Zweck wird eine Vakuumanlage eingesetzt, die mit den Entgasungszonen (Vakuumzone) in Verbindung steht. In der Vakuumanlage erzeugt ein Vakuumpumpenstand einen Unterdruck, der durch entsprechende Rohrleitungen auf die Vakuumzone wirken kann und so bewerkstelligt, dass störende Gase, Abbauprodukte von Polymeren und Additiven und Verunreinigungen aus der Schmelze abgezogen werden.

Ziel der Entgasung ist es ferner, Wasser (in Form von Wasserdampf) und nichtvernetzte Kunststoffmoleküle (Restmonomere) aus der Schmelze zu entfernen.

Diese gasförmigen und teilweise auch flüssigen Bestandteile, die durch Unterdruck aus der Plastifizierungseinheit entzogen werden, schädigen langfristig die Vakuumeinheit, wodurch die Lebensdauer und Verfügbarkeit verschiedener Bauteile erheblich verkürzt wird. Der Reinigungs- und Wartungsaufwand steigt erheblich, und Maschinenausfälle sind von Zeit zu Zeit unvermeidlich. Schließlich treten Probleme mit der Entsorgung dieser Stoffe und Maschinenkomponenten auf.

Der Grund für die Schädigung und Verunreinigung der Vakuumeinheit und der damit verbundenen Komponenten, wie etwa der Rohrleitungen, Ventile und Sensoren, liegt darin, dass die ausgeschiedenen Stoffe miteinander reagieren, und sich thermodynamisch bedingt auf den Oberflächen abscheiden.

Um eine bestmögliche Qualität der Erzeugnisse zu erreichen, die aus der Kunststoffschmelze hergestellt werden, darf diese nur niedrige Gehalte an Feuchtigkeit enthalten. Außerdem sollen flüchtige Zerfallsprodukte des Kunststoffs, z.B. Oligomere oder unerwünschte Additivbestandteile vom Endprodukt ferngehalten werden. Man ist daher bestrebt, Wasserdampf, Kohlenwasserstoffe und andere sublimationsfähige Bestandteile aus der Schmelze im Extruderbereich abzusaugen. Diese Begleitstoffe, neben Leckageluft und Wasserdampf, erfordern eine Vakuumerzeugung welche durch diese nicht beeinträchtigt wird. Bisherige Systeme setzen hier auf Betriebsmittel welche die Begleitstoffe mitfördern oder im Vakuum arbeitende Abscheidesysteme.

Hierfür kommen im Stand der Technik Systeme zum Einsatz, die im Wesentlichen aus einer Schmelzefalle, einer Abscheidevorrichtung bzw. Gasreinigungseinrichtung und einer Vakuumeinrichtung bestehen.

In Abscheidevorrichtung bzw. Gasreinigungseinrichtungen nach dem Stand der Technik werden folgende Verfahren eingesetzt:

### 1) Kondensation

Kondensierbare Verunreinigungen z.B. Oligomere werden aus einem Gemisch aus Wasserdampf, Kohlenwasserstoffen und Luft auskondensiert.

Beim Einsatz trockenlaufender Vakuumpumpen wie z.B. Roots-, Schrauben-, Klauenpumpen o.ä. oder Kombinationen aus diesen, wird eine im Vakuum arbeitende Abscheidung eingesetzt. Üblich sind Verfahren, welche auf Kondensatoren/Sublimatoren (Kühlfallen), meist in Verbindung mit Partikelfiltern beruhen.

Aufgrund der Dampfdruckkurve von Wasser ist eine vollständige Auskondensierung nicht möglich. Bei sehr niedrigen Drücken besteht die Möglichkeit, dass man erst unterhalb des Gefrierpunkts, Eis abscheiden kann (resublimieren). Da sich an den Kühlfallen auch andere Anhaftungen und Eis bilden können, sind hier auch Abreinigungseinrichtungen für die Kühlflächen üblich. Hier ist auch ein abwechselnder Betrieb von redundanten Systemen denkbar (anfrieren, abtauen).

Da ein kontinuierlicher Betrieb sichergestellt werden soll, wird meist ein redundantes System vorgehalten. Dies ermöglicht die Reinigung eines Abscheidesstranges während der andere in Produktion ist, s. EP 2 209 604 und DE 10 2013 000 316.

### 2) Gaswäscher

Eingesetzt werden auch Gaswäscher. Hier werden die Gase aus dem Extruder mit einer Waschflüssigkeit großflächig in Kontakt gebracht. Solche Einrichtungen werden auch eingesetzt, um gasförmige Verunreinigungen aus einem solchen Gasgemisch in einer Waschflüssigkeit zu absorbieren oder um feste Bestandteile derartiger abgesaugter Gasgemische auszufiltern und/oder in einer Waschflüssigkeit zu lösen.

Diese Waschflüssigkeit soll im Gas enthaltene Stoffe absorbieren bzw. adsorbieren, so, dass diese mit der Flüssigkeit aus dem Vakuumsystem entfernt werden können (kontinuierlich/diskontinuierlich). Bei geschickter Wahl der Waschflüssigkeit kann auch der Wasserdampfanteil im Gasstrom vermindert werden (Hygroskopische Flüssigkeit). Bei der aus der DE 10 2011 082 769 vorbekannten Vorrichtung wird z.B. Glycol als hygroskopische Waschflüssigkeit in Kombination mit einer Regenerierungsanlage verwendet.

Eine weitere Gasreinigungsanlage mit Verwendung einer Waschflüssigkeit (jedoch ohne Vakuumeinrichtung) offenbart zum Beispiel die US 2008/0207868 A1. Als Waschflüssigkeit wird Ethylenglycol eingesetzt.

Eine Gasreinigungseinrichtung mit einem integriertem Filter und einem Kondensator zeigt die DE 10 2008 031 834 A1.

Gemäß der DE 44 24 779 A1 wird vorgeschlagen dem vorhandenen Vakuum insbesondere Weichmacheröl zu entziehen. Dabei wird das aus dem Extrusionsprozess stammende und zu kondensierende Gas über eine Rohrleitung zu einem Feststoffabscheider geführt, in dem grobe Verunreinigungen und Restmonomere (Oligomere) abgetrennt werden. In einem Kondensatabscheider werden dampfförmige Bestandteile des Gases kondensiert und anschließend in einem Kondensatsammelgefäß aufgefangen. An den entsprechenden Stellen sind Ventile vorgesehen, die gegebenenfalls automatisch gesteuert werden, um einen ordnungsgemäßen Betrieb zu gewährleisten.

In der WO 2009/065384 A2 wird unter anderem vorgeschlagen, das Gasgemisch in der Entgasungseinrichtung auf Temperaturen unter 10°C zu kühlen und sublimationsfähige Gase auf einer gekühlten, horizontalen Platte zu resublimieren, die von dort abgeblasen werden. Thermodynamisch betrachtet wird in dieser Vorveröffentlichung ein Vorgang beschrieben, bei dem ein Feststoff unmittelbar in Gas übergeht und durch Kühlung als Feststoff auf der Kühlplatte resublimiert. Die Resublimierung kann gemäß dieser Vorveröffentlichung sowohl in einem Sublimator in Form einer gekühlten Platte als auch in einem nachgeordneten und nach dem Stand der Technik bekannten Taschenfilter erfolgen.

### 3) Flüssigkeits-Ringpumpen

Betriebsmittelpumpen können als Flüssigkeitsringpumpen ausgeführt werden. Wird als Betriebsmittel Wasser eingesetzt, sind meist zusätzliche Vorpumpen nötig, wie z.B. ein- oder mehrstufige Roots-Gebläse (also Drehkolben-Gebläse ohne innere Verdichtung), da der Dampfdruck des Betriebsmittels das erreichbare Endvakuum sowie Saugvermögen der Pumpe beeinflusst (wobei diese vorgegebenen Temperaturen abhängig sind). Deshalb wird hier auch auf Glykol oder andere Flüssigkeiten zurückgegriffen. Hierbei muss die Flüssigkeit im Betrieb gereinigt werden bzw. bei Bedarf ersetzt werden.

Ferner wird angemerkt, dass ganz allgemein Redundanzsysteme zum Stand der Technik gehören. Sie ermöglichen beispielsweise eine Wartung einzelner Komponenten, während die Anlage als solche weiter betrieben werden kann.

Trotz der genannten Maßnahmen kommt es zu einer erhöhten Verschmutzung der Vakuumpumpen demzufolge haben die Systeme einen hohen Wartungsaufwand.

So setzen sich häufig im Bereich einer Kühlfalle schon bei sehr niedrigen Betriebsdrücken schwach klebrige Pulver (<= 3mbar, Kühlwassertemperatur °C) und bei höheren Drücken (3 - 10 mbar, Kühlwassertemp. -4°C - +5°C) flüssige oder mehrphasige Substanzen mit Feststoffanteil ab. Im Partikelfilter finden sich staubartige Ablagerungen, welche manchmal klebrig ausfallen können. Die Art der Abscheidungsprodukte ist zusätzlich zu den genannten Parametern Druck und Kühlertemperatur auch von der Kühlerbauart, der Leckluft und den Leckagen, dem verarbeiteten Material sowie den Extrusionsparametern abhängig.

Als Hauptverursacher von verklebten Filterelementen wurde Monoethylenglykol identifiziert.

Der aus dem Stand der Technik (z.B. der DE 10 2013 000 316 A1) bekannte Pumpenstand besteht meist aus einer Kombination aus Roots- und Schraubenpumpen. Da sich im Gasstrom noch Reste des Abgases befinden, welche an den berührenden Oberflächen zu Ablagerungen führen, wie z.B. Pumpengehäusen und -rotoren, ist eine Spüleinrichtung vorhanden. Mit dieser Spüleinrichtung ist es möglich Flüssigkeiten während dem Betrieb oberhalb der Rootspumpe einzuspritzen.

Ein grundlegender Aufbau für ein solches, nach dem Stand der Technik bekanntem Extrusionssystem umfasst dabei einen Extruder oder eine Extruderanordnung, welcher ein Abscheider und eine oder mehrere Vakuumpumpen nachgeordnet ist.

Bei dem Extruder kann es sich um einen Ein- oder Mehrschneckenextruder handeln. Als Abscheider können z.B. Kondensat-Systeme nach dem Stand der Technik verwendet werden, wie sie beispielsweise in der DE 10 2013 000 316 A1 gezeigt und beschrieben sind. Derartige Kondensat-Systeme können auch Filter oder Kombinationen von Abscheider und Filter umfassen. Zugehörige Vakuumpumpenstände sind dabei ebenfalls aus dem Stand der Technik bekannt.

Gemäß der GB 2 410 919 A wird ein Verfahren zur Verarbeitung von Kunststoffabfall sowie eine zugehörige Vorrichtung beschrieben.

Die vorbekannte Vorrichtung weist eine Absaugeinrichtung auf, um letztlich das entsprechend aufbereitete Kunststoffmaterial abzusaugen. Die aus dem Kunststoffmaterial entfernten oder abgesaugten Schadstoffe sollen entsprechend eliminiert werden, wozu herkömmliche Luftfilter verwendet werden können.

Die vorstehend genannte Vorveröffentlichung befasst sich mit der Abgasreinigung unter Verwendung einer PlasmaBehandlung.

Die WO 03/047727 A1 beschreibt ein Verfahren zur Gasreinigung, welches ebenfalls eine Plasmaquelle verwendet, allerding ohne weitere Filter oder Moderatoren. Zur Verbesserung des Verfahrens soll zu Zündung des Plasmas Prozessgas verwendet werden, welches sauerstoff- und/oder stickstoffhaltig ist, wobei zweckmäßiger Weise als Prozessgas Luft verwendet werden soll.

Schließlich ist aus der DE 10 2007 056 610 A1 ein Verfahren zum Extrudieren von Kunststoffteilen bekannt, wobei hier ferner vorgeschlagen wird, die Vakuumleitungen zwischen einem Extruder und einem Sublimator beispielsweise auf 300° zu beheizen.

Vor diesem Hintergrund ist es Aufgabe der vorliegenden Erfindung ein verbessertes Verfahren sowie eine verbesserte Vorrichtung zum Entgasen von Schmelzen, insbesondere Polymerschmelzen zu schaffen.

Diese Aufgabe wird bezüglich dem Verfahren entsprechend den im Anspruch 1 und bezüglich der Vorrichtung entsprechen den im Anspruch 12 angegebenen Merkmalen gelöst. Vorteilhafte Ausgestaltungen der Erfindung sind in den Unteransprüchen angegeben.

Durch die vorliegende Erfindung werden ein deutlich verbessertes Verfahren sowie eine deutlich verbesserte Vorrichtung zur Entgasung von Schmelzen, d.h. insbesondere Polymerschmelzen geschaffen. Dies wird durch eine verbesserte Abgasreinigungsvorrichtung ermöglicht.
- Die Abgase werden in einer Abgasreinigungsvorrichtung weitestgehend neutralisiert, so dass es entweder keiner weiteren Reinigung bedarf, oder die verbleibenden Reststoffe mit minimalem Aufwand entfernt werden können, und dass vor den Pumpen negative feste/flüssige Inhaltsstoffe leicht herausgefiltert werden können.
- Als wesentlicher Bestandteil der Abgasreinigungsvorrichtung wird eine Plasmavorrichtung eingesetzt.
- Es wird ein Verfahren vorgeschlagen, das die nahezu rückstandsfreie Neutralisierung der Abgase ermöglicht.
- Bei aktivierter Plasmaquelle war kein Differenzdruckanstieg über den Filter erkennbar.

Dies umfasst vorzugsweise die folgenden Schritte:
- Kondensate, Resublimate, Ablagerungen, Verkokungen und Verdreckungen werden durch Temperierung der jeweiligen Zuleitungen vermieden, um deren Entstehung bis zum aktiven Plasma zu verhindern.
- Die Zuleitungen sind in Form von beheizten Leitungen ausgeführt und können in einem regelbaren, eingegrenztem Temperaturbereich beheizt werden.
- Die Verfahrensregelung erfolgt so, dass Explosiv-Atmosphären im Pumpenbereich durch permanente Oxidation vermieden werden. Dazu kann eine Steuerung vorgesehen sein, die vorzugsweise Außenluft bzw. Wasserdampf oder auch andere Prozessgase wie Sauerstoff, Stickstoff, Kohlendioxid oder Argon in den Prozess zuführt. Grundsätzlich sind alle verfügbaren Gase denkbar die für die gewünschten Reaktionen hilfreich sind.

Durch das Verfahren ergeben sich folgende Vorteile:
- Einsatz von trocken laufenden Pumpen ohne Spül-Einrichtung.
- Wasser-Abscheidung nach der Rootspumpe in einem höheren Druckbereich; der Wasserdampf wird dadurch besser abgeschieden (auskondensiert).
- Schraubenpumpen können eventuell mit kleiner Baugröße gewählt werden.
- Die Wartung der verunreinigten Komponenten ist bei den bekannten Lösungen wirtschaftlich nur innerhalb längerer Perioden möglich. Egal wie die Ablagerungen aussehen ist eine Abnahme in der Wirksamkeit der Abscheider, wie Feststoffabscheider, Kondensatabscheider oder Sublimatabscheider, innerhalb dieser Perioden zu verzeichnen.
- Um den Anlagenaufwand zu verringern, können die Wartungsintervalle erhöht werden.
- Zudem lässt sich im Rahmen der Erfindung auch die Wirtschaftlichkeit der mit der erfindungsgemäßen Vorrichtung durchzuführenden Prozesse deutlich verbessern.
- Ferner lässt sich durch die vorliegende Erfindung auch die Lebensdauer der Vakuumanlage und dabei insbesondere die der in der Vakuumanlage vorgesehene Vakuumpumpe erhöhen und im Stand der Technik bestehende Entsorgungsprobleme beseitigen.
- Bisher anfallende Reststoffe entfallen und müssen nicht zusätzlich entsorgt werden.

Im Rahmen der Erfindung ist dabei vorgesehen, dass den Abgasen und/oder Schadstoffen allgemein Energie oder z.B. thermische Energie zugeführt und/oder diese Abgase oder Schadstoffe in sonstiger Weise in den Plasma-Zustand überführt werden. Bei der Anregung des Abgases oder der Schadstoffe zur Überführung in den Plasma-Zustand werden vorhandene Moleküle ganz oder teilweise ionisiert. Nachdem die Gase nicht mehr im Plasmazustand gehalten werden, können die Teilchen zu energetisch günstigen Verbindungen reagieren. Dabei handelt es sich vorwiegend um Gase, welche ohne weitere Filterung gepumpt werden können.

Plasmen von unterschiedlicher Art werden nach zahlreichen Verfahren, s. z.B. /PlasTEP Conference Proceedings, Tartu, 2012/ erzeugt und z.B. für die Modifikation von Substraten verwendet. Die Plasmabehandlung dient z.B. der Beschichtung, Reinigung und Ätzung von Substraten, in der Medizin zur Behandlung von Implantaten sowie in der Technik zur Abgasreinigung. Die Geometrie der zu behandelnden Werkstücke reicht von flachen Substraten, Faserbündeln oder bahnförmigen Materialien bis zu Formteilen von beliebiger Gestalt. Durch hohe Wirkungsgrade und gute Verfügbarkeit von Mikrowellenerzeugern besitzen Mikrowellenplasmen erhebliche Bedeutung.

Verschiedene Quellen zur Plasmabehandlung, wie Mikrowellen (MPS microwave plasma sources), Korona (DC und RF), Hochspannungsvorrichtungen (US 2009 146 349) und RF-Quellen (bis GHz Bereich) sind bekannt (Beispiele bekannter Hersteller für Mikrowellen-Plasmaquellen sind: Muegge (http://www.muegge.de/de/produkte/); CS Clean Systems, Piranha, EP 885 455 und EP 992 052, EP 872 164; für RF-Quellen: DryScrub; Advanced Energy, Litmas Blue; ASTeX, ASTRON). Siehe auch PlasTEP Conference Proceedings, Tartu, 2012. In dieser Vorveröffentlichung wird beispielsweise auch von kaltem oder nicht-thermischem Plasma, einem heißen nicht-thermischen Plasma (einem sogenannten Übergangs-Plasma) oder einem thermischen Plasma gesprochen bzw. unterschieden.

Im Rahmen der Erfindung werden bevorzugt Mikrowellenplasmen als Reinigungsvorrichtung eingesetzt, grundsätzlich sollen die anderen Möglichkeiten der Plasmaerzeugung aber nicht ausgeschlossen werden. Nachdem Stand der Technik sind diese Mikrowellen Plasmaquellen soweit automatisiert, dass die Mikrowelleneinkopplung selbstständig angepasst wird (Automatischer Tuner, Automatic-Tuner TRISTAN (Muegge GmbH)) Auch kann im Druckbereich von 1 mbar bis 50 mbar das Plasma einer Glimmentladung genutzt werden.

Bei einem Plasma handelt es sich um einen anderen Aggregatszustand. So werden die Aggregatszustände fest, flüssig und gasförmig durch Erhöhung der Temperatur (z.B. Zuführung von thermischer Energie) durchschritten. Dies gilt prinzipiell fortlaufend auch für Plasma. Erhöht man die Temperatur eines Gases immer weiter, so liegen irgendwann Atome und Kerne als Ionen getrennt voneinander vor. Dieser Zustand wird thermisches Plasma genannt. Ein Plasma kann aber auch erzeugt werden, indem quasi nur die Elektronen angeregt werden. Dabei spricht man von einem nicht-thermischen oder auch Ungleichgewichtsplasma.

Plasma wird in der Industrie in verschiedenen Bereichen eingesetzt. So werden thermische Plasmen zum Schweißen, Trennen und zur Gasverarbeitung genutzt. Zum Beschichten, oder zur Oberflächenmodifikation werden Plasmen bei Atmosphärendruck oder im Hochvakuum eingesetzt. Auch werden Fluor-Verbindungen aufgebrochen, welche entweder toxisch oder ein hohes Klimapotential besitzen, und ansonsten mit anderen Abscheidemethoden (Gaswäscher, Adsorber, etc.) aus dem Abgas nach der Vakuumpumpe entsorgt werden müssen. Mit den GlidArc Anlagen wurden auch schon Kampfmittel bei Atmosphärendruck zerstört. Ebenso wurde der Abbau von Kältemitteln beschrieben.

Zahlreiche Vorrichtungen unterschiedlichster Bauart dienen der Erzeugung von Mikrowellenplasmen. Nach dem Stand der Technik enthalten diese Vorrichtungen eine Plasmakammer, einen darin liegenden Rezipienten bzw. Nutzraum und einen daran ankoppelnden zuleitenden Hohlleiter, der oft als umgebender Hohlleiterresonator ausgeführt ist.

Darin werden Mikrowellen über eine Zuleitung und gegebenenfalls eine Kopplung in eine Plasmakammer eingestrahlt. Unterschiedliche Plasmen dienen verschieden Anwendungen. Für die Zuleitung der Mikrowellen werden u.a. Hohlleiter und Koaxial-Kabel, für die Kopplung u.a. Antennen und Schlitze verwendet (DE 42 35 914 A1).

Zusammenfassend kann also festgehalten werden, dass sich die vorliegende Erfindung insbesondere auf ein Verfahren zum Entgasen von Polymerschmelzen sowie die Neutralisierung der dabei entstehenden Abgase vor der kontinuierlichen Weiterverarbeitung zu verstreckten Polymerfolien, bezieht, wobei vorzugsweise
- ein zu verarbeitender fester Kunststoff insbesondere in Granulatform von einer Plastifiziereinheit (Extruder) aufgeschmolzen wird, und
- ein oder mehrere flüssige oder feste Additive (z. B. Weichmachern, Gleitmitteln, Antistatikmitteln, usw.) dem Kunststoff zugegeben werden, und
- die Mischung aus aufgeschmolzenem Kunststoff und Additiven in einer oder mehreren Vakuumzonen einer Plastifizierungseinheit entgast wird, die mit einer Vakuumanlage in Verbindung steht bzw. stehen; und
- diese Abgase in einer Abscheidevorrichtung bzw. einer Reinigungsanlage neutralisiert werden, und
- die gesamte Anlage so ausgeführt sein soll, dass Kondensate, Resublimate und Verdreckungen durch organische Ablagerungen und Verkokungen vermieden werden.

So ist beispielsweise bei der Verarbeitung von z.B. ungetrocknetem PET eine Vakuumentgasung der flüssigen Schmelze nötig. Die Einsparung einer Vortrocknung ist durch den Einsatz eines Doppelschnecken-Extruders möglich. Dadurch wird ein aufwändiger Trockner/Kristallisator-Prozess vermieden. Dieser benötigt sehr viel Energie und es müssen mehrere Tonnen Material auf einer ausreichend hohen Temperatur vorgehalten werden. Für eine gleichbleibende Schmelzequalität müssen die Verweildauer sowie Temperatur und Feuchtigkeit im Trockner konstant gehalten werden.

Mit dem erfindungsgemäßen System aus einem Doppelschneckenextruder, einer Reinigungs- bzw. Neutralisierungsvorrichtung und einem Vakuumsystem kann die im Material enthaltene Feuchtigkeit, die bis zu 4000 ppm betragen kann, ohne Vortrocknung bis unter die Nachweisgrenze reduziert werden. Dazu sind im Verfahrensteil des Extruders ein oder mehrere Entgasungszonen vorgesehen, welche, durch den Materialtransport im Extruder unterstützt, eine großflächige Entgasung erlauben.

Eine Entgasung ist vorgesehen, da die enthaltene Feuchtigkeit bei üblichen Extrusionstemperaturen (260°C - 300°C) und üblichen Vakuumdrücken (0mbar - 100mbar) in die Gasphase übergeht (Dampfdruck angeben: Wasser 260°C ∼ 42 bar, 280°C ∼ 55 bar, (s. auch Antoine Gleichung).

Zusätzlich gelangen andere organische Reste in das Vakuumsystem. Diese entstehen teils durch eine Rückreaktion des PET zu Monoethylenglykol und Terephtalsäure aber auch durch thermische und hydrolytische Schädigung des Materials bei der Aufschmelzung. Dabei treten neben dem Polymer, Luft und Wasser, auch cyclische und lineare Oligomere, Acetaldehyd sowie bei PET 1,2 Ethandiol, 1,4 Benzoldicarbonsäure, 2-Metyhldioxolan, und weitere undefinierte Abbauprodukte auf. Bei PP treten neben den Oligomeren, Ester, Amine und flüchtige Bestandteile aufgrund der Zugabe von Additiven (Antistatik, Gleitmittel, Slip), wie Glycerinmonostearat und Erucasäureamid auf. Diese Kohlenwasserstoffe haften bei nicht ausreichender Beheizung an den Wänden an und reagieren zu langkettigen Molekülen welche sich meist nur unter hohem Wartungsaufwand entfernen lassen.

Die Erfindung wird nachfolgend anhand von Ausführungsbeispielen näher erläutert. Dabei zeigen im Einzelnen:
- Figur 1:: eine schematische Darstellung eines ersten erfindungsgemäßen Ausführungsbeispiels;
- Figur 2:: eine schematische Testanlage, durch die die Überlegenheit der erfindungsgemäßen Lösung gegenüber einer nach dem Stand der Technik verwendeten Anlage durchführbar ist;
- Figur 3:: ein abgewandeltes Ausführungsbeispiel mit vereinfachtem Aufbau;
- Figur 4:: ein Beispiel einer seriell und parallel mehrfach redundant aufgebauten Anlage mit vier Plasmazonen bzw. Plasmaquellen und eine zusätzlichen redundanten Rohrleitungssystem;
- Figur 5:: eine vereinfacht aufgebaute Anlage mit lediglich einer Entgasungsleitung und redundant ausgelegter Abscheider-Anordnung;
- Figur 6:: eine gegenüber Figur 5 nochmals vereinfachte Anlage ohne redundanten Abscheiderzweig; und
- Figur 7:: ein nochmals abgewandeltes Ausführungsbeispiel mit zwei parallel geschalteten Entgasungsleitungen, wobei in einer Entgasungsleitung nur eine Plasmaquelle vorhanden ist und in der parallel dazu verlaufenden zweiten Entgasungsleitung zwei Plasmaquellen in Reihe geschaltet sind, wobei dieser eine Zweig mit einem zusätzlichen redundanten Leitungssystem mit der Pumpstation verbindbar ist.

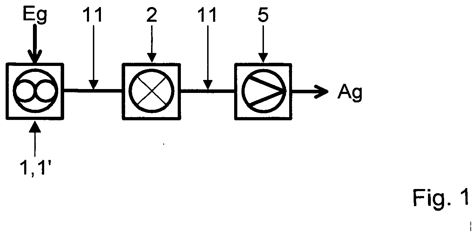

Nachfolgend wird das Grundprinzip der Erfindung unter Bezugnahme auf Figur 1 nähererläutert.

Dabei zeigt Figur 1 in schematischer Darstellung eine Plastifiziereinheit 1 beispielsweise in Form eines Extruders oder beispielsweise in Form eines Doppel-Extruders 1.1', eine nachgeschaltete Plasmaquelle 2 sowie eine weitere, der Plasmaquelle 2 nachgeschaltete Vakuumanlage 5, die teilweise auch als Unterdruckanlage 5 bezeichnet wird. Die gesamte Anordnung ist über Leitungen 11 (Rohre) miteinander verbunden.

Von daher gibt Figur 1 den einfachsten denkbaren Aufbau der erfindungsgemäßen Anordnung wieder, bei welcher die erwähnte Plasmaquelle 2 direkt nach dem Extruder 1,1' einsetzbar ist und dabei jegliche Abscheidung überflüssig macht.

Eine entsprechende Plastifiziereinheit 1 gemäß dem ersten Ausführungsbeispiel nach Figur 1 umfasst beispielsweise einen Extruder 1,1' der bekanntermaßen in der Regel zumindest eine oder zwei (oder mehrere) Plastifizierungs-Schnecken aufweist. Diese in Figur 1 nicht näher dargestellte, zumindest eine Plastifizierungs-Schnecke der Plastifiziereinheit 1 ermöglicht gegebenenfalls unter Mithilfe von Heizeinrichtungen oder Heizbändern, dass der der Plastifiziereinheit 1 zugeführte Kunststoff aufgemischt und gegebenenfalls mit einem zugeführten Additiv vermischt wird. Gleichzeitig wird der Kunststoff geschmolzen. Die Kunststoffschmelze gelangt in den Einflussbereich einer oder mehrerer Vakuumzonen 5 der gesamten Anlage.

Dabei werden z.B. die beiden Vakuumdome der Doppelschnecke zur Vermeidung von Kondensaten isoliert. Die Leitungen werden zusammengefasst und die Gastemperatur über ein Thermoelement ermittelt.

Grundsätzlich kann die erfinderische Lösung bei allen Arten einer Vakummentgasung an Extrudern, also z.B auch bei einer Seitenentgasung eingesetzt werden. Allgemein gesprochen steht der von der Schmelze befüllte Innenraum der Plastifiziereinheit 1 über eine entsprechende Öffnung im Gehäuse mit der erwähnten Vakuumzone 5 in Verbindung. Letztlich wird der, der Plastifiziereinheit beispielsweise an dem erwähnten Eingang Eg zugeführte Kunststoff dann in geschmolzener Form an einem Ausgang Ag abgegeben.

Bekannt sind auch Extruder, welchen Schmelze zugeführt wird und auch im Einzugsschacht eine Entgasung stattfindet.

Es ist zwar schon grundsätzlich bekannt, dass Plasmaquellen beispielsweise in der Halbleiterindustrie eingesetzt werden, nämlich zur Abgasbehandlung. Die Plasmaquellen werden dabei vor den Vakuumpumpen eingesetzt, allerdings bei einem maximalen Druck von 1 mbar. Alle anderen Anwendungen wurden bisher entweder bei Atmosphärendruck (∼1000 mbar) oder unter Hochvakuum (<1 mbar) durchgeführt.

Völlig neu ist aber der im Rahmen der vorliegenden Erfindung beschriebene erstmalige Einsatz einer Plasmaquelle in einer Kunststoff verarbeitenden Maschine oder Anlage, d.h. im Vakuumsystem eines Extruders (Ein- und Mehrschneckenextruder) und die direkte Behandlung der Abgase am Entstehungsort. Zusätzlich ist der Druckbereich am Extruder nicht mit anderen Anwendungsfällen vergleichbar. Die bei der Extrusion benötigten Drücke von z.B. BOPET: 5 - 10 mbar, MOPET:10 - 15 mbar, BOPP: 80 -120 mbar und BOPA: 200 - 300 mbar sind bisher nicht erschlossen.

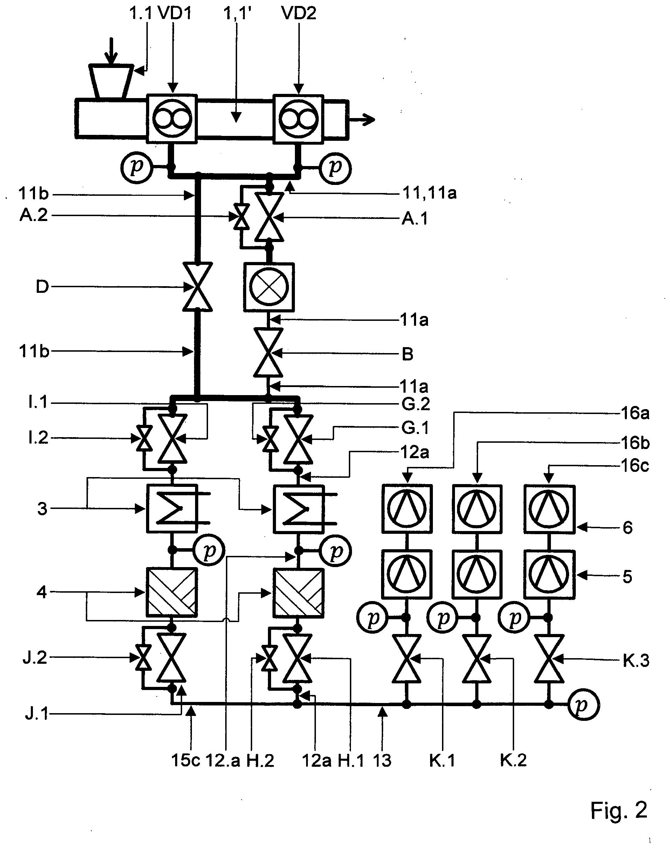

Nachfolgend wird auf Figur 2 Bezug genommen, die eine Testvorrichtung zeigt, um die Wirksamkeit der erfindungsgemäßen Lösung zu bestimmen. Dabei wird im schematisch dargestellten Extruder 1, 1' ein Kunststoffgranulat aufgeschmolzen, welches der Plastifizierungseinheit 1, 1' über den Eingang E, z.B. in Form eines Einfülltrichters 1.1 zugeführt wird.

In der einen oder den gegebenenfalls mehreren Vakuumzonen, hier VD1 und VD2, wird eine Schmelze (Kunststoffschmelze) entgast. Hierzu ist eine Vakuum- und/oder Entgasungsleitung 11 vorgesehen die nachfolgend auch als Entgasungsleitung 11a bezeichnet wird. Hierüber wird eine Verbindung zwischen der Vakuumzone VD, hier den Vakuumzonen VD1, VD2 über die nachfolgend noch erörterte Plasmaquelle 2 und eventuell weiteren Kühlfallen 3 und Filter- oder Abscheider 4 sowie über weitere Leitungsabschnitte mit der bevorzugt mehrere Vakuumpumpen umfassenden Vakuumanlage 5, 6 hergestellt. Um die Wirksamkeit der Plasmaabscheidung quantifizieren zu können, ist zudem eine Bypassleitung 11b mit darin gehaltenem Schließventil D vorgesehen. Durch Öffnen eines Bypassventiles D in der Bypassleitung 11b und Schließen der Ventile A.1, A.2 und B in der die Plasmaquelle 2 umfassenden Entgasungsleitung 11a kann die Situation nach dem Stand der Technik nachgestellt werden, bei der die Abgase in Kühlfallen 3 und Partikelfiltern 4 abgeschieden werden. Durch Vergleichsmessungen der Abscheidemengen und -raten an den Abscheidern 3, 4 mit/ohne Plasmaquelle 2 kann die Wirksamkeit der Plasmaquelle nachgewiesen werden.

Das Ausführungsbeispiel mit einer Testvorrichtung gemäß Figur 2 zeigt also, dass die dort vorgesehenen beiden Vakuumzonen VD1 und VD2 (wo die Entgasung innerhalb des Extruders stattfindet) alternativ über die Entgasungsleitung 11a oder die dazu verlaufende Bypassleitung 11b durch Öffnen bzw. Schließen der jeweils in den Leitungen vorgesehenen Schaltventile mit nachfolgenden Behandlungsstufen verbunden sind.

Die nachfolgende Behandlungsstufe umfasst dabei eine Leitung 12a, in der beispielsweise ein einen größeren Durchströmquerschnitt und ein einen kleineren Durchströmquerschnitt aufweisendes Schließventil G.1, G.2 parallel zueinander geschaltet sind. Daran anschließend ist beispielsweise eine Kühlfalle 3 und ein Abscheider oder Filter (Partikelfilter) 4 vorgesehen. Daran schließt sich in Reihe eine weitere Schaltventilanordnung mit einem größerem Schaltventil H.1 mit größerem Durchströmquerschnitt und kleinerem, parallel geschalteten Schaltventil H.2 mit einem kleineren Durchströmquerschnitt an.

An diesen, die vorstehend genannte Einrichtung umfassenden Leitungsabschnitt 12a schließt sich eine weitere Leitung 13 an, die zu einer Vakuumanlage 5,6 führt, die im gezeigten Ausführungsbeispiel 3 drei parallele Zweige 16a, 16b, 16c mit jeweils zwei hintereinander geschaltete Vakuumstufen oder Vakuumpumpen 5, 6 umfasst. Eingangsseitig sind diese Vakuumanlagen jeweils über ein Schaltventil K.1, K.2 oder K.3 abschaltbar oder an die Leitung 13 zuschaltbar, damit das entsprechende Vakuum nicht bis zur Entgasungszone VD, d.h. bis zu den Entgasungszonen VD1 bzw. VD2 wirken kann.

Die vorstehend erläuterte weitere Behandlungsstufe mit einem einen größeren und einen kleineren Durchströmquerschnitt aufweisenden parallel geschalteten Ventil G.1 und G.2 sowie einer sich daran anschließenden Kühlfalle 3 und einem Filter oder Abscheider 4 (beispielsweise in Form eines Partikelfilters) und einer sich daran anschließenden parallel geschalteten Schaltventil-Kombination mit einem einen größeren Durchströmquerschnitt und einen kleineren Durchströmquerschnitt H.1, H.2 aufweisenden Schaltventil ist in einer zur ersten Leitung 12a parallelen Leitung 12b zusätzlich vorgesehen (und zwar mit den Ventilen I.1 und I.2 sowie J.1 und J.2).

Zum Test ist die zur Leitung 11a parallel geschaltete Bypassleitung 11b vorgesehen, die keine Plasmastufe 2 umfasst, sondern z.B. leidglich ein Schaltventil D.

Aus der Darstellung gemäß Figur 2 ist auch zu ersehen, dass die beiden Entgasungszonen VD1 und VD2 über eine Verbindungsleitung 15a miteinander verbunden sind. Ebenso sind die beiden jeweils in Duchströmungsrichtung den Schaltventilen D, B nachgeschalteten Endabschnitte der Bypassleitungen 11a und 11b über eine Verbindungsleitung 15b miteinander verbunden. Schließlich sind aber auch die in Durchströmungsrichtung den Schaltventilen H.1 und H.2 zum einen und J.1 und J.2 zum anderen nachgelagerten Abschnitte der Leitungen oder Rohre 12a, 12b über eine Verbindungsleitung 15c miteinander verbunden.
Somit ergibt sich zu dem die Einrichtung 3, 4 umfassenden Leitungsabschnitt 12a eine weitere parallel geschaltete Bypassleitung 12b, die gleichermaßen aufgebaut ist wie die in der Leitung 12a angeordneten Komponenten. Mit anderen Worten sind auch in der Leitung 12b jeweils zwei parallel zueinander geschaltete Schaltventile I.1, I.2, eine nachgeordnete Kühlfalle 3 sowie ein der Kühlfalle 3 nachgeordneter Abscheider oder ein Partikelfilter 4 vorgesehen. Ausgangsseitig sind dann wiederum zwei parallel geschaltete Schließventile J.1 und J.2 vorgesehen, deren Ausgangsleitung über die Verbindungsleitung 15c mit dem Ausgang des ersten Leitungsabschnittes 12a verbunden ist und in die Ausgangsleitung 13 übergeht, worüber die Vakuumanlagen angeschlossen sind.

Zudem sind die Leitungen 11, 11a, 11b im Rahmen der Erfindung vor den Abscheidern 4 beheizt ausgeführt, um Verschmutzungen zu vermeiden. Dies geschieht bei der Verarbeitung von PET im Bereich von 200°C - 300°C. Zusätzlich sind große Querschnitte und gut zugängliche Reinigungsflansche vorgesehen.

Die im gezeigten Ausführungsbeispiel nach Figur 2 bis zu den dort beschriebenen beiden Kühlfallen 3 führende Vakuum- und/oder Entgasungsleitungen 11a, 11b und 12a, 12b werden temperiert, beispielsweise auf eine Temperatur von 150°C bis 300°C, um eine Kondensation (und/oder Sublimation) der Abgase bereits in dieser Rohrleitung weitestgehend auszuschließen. Dies ist für den Betrieb an einer Produktionsanlage im wartungsfreien Betrieb wichtig. Jede Oberfläche im Vakuumsystem, vor der Plasmaquelle, der Abscheidung, bzw. den Filtern muss in ausreichendem Maß beheizt werden. Die Plasmaquelle muss dahingehend angepasst werden.

Die Vakuumleitung zeichnet sich zudem dadurch aus, dass durch eine spezielle Vorrichtung (Schmelzefalle) das Eindringen von Schmelze aus der Plastifiziereinheit in die Vakuumleitung verhindert wird.

Bei der in der Bypassleitung 11a vorgesehenen Plasmaquelle handelt es sich um einen Apparat, der das durchströmende Gas ganz oder teilweise ionisiert und so chemische Reaktionen initiiert.

Die prinzipielle Eignung der Plasmaquelle zur Behandlung der Extrusionsabgase kann mit ausführlichen Referenzversuchen an einer Produktionsanlage nachgewiesen werden.

Die Plasmaquelle wird durch einen Mikrowellengenerator mit Energie versorgt. Die Plasmaquelle kann als Rohrbauteil durchströmt werden. Die Durchmesser der Ein- und Auslassöffnungen der Plasmaquelle sind aufgrund der eingesetzten Mikrowellenfrequenzen eingegrenzt. Bei größeren Durchmessern werden auch Mikrowellen in die Rohrleitungen eingekoppelt, bzw. aus der Plasmaquelle heraus geleitet. Damit ist die Funktion nicht mehr gegeben (dies gilt nur bei der Ausführung mittels einer Mikrowellen-Plasmaquelle).

Je nach Ausführungsvariante befindet sich z.B. in der Plasmaquelle ein Quarzrohr, welches zum Gehäuse hin mit Polymerdichtungen abgedichtet ist. Dieses wird als Mikrowellen Fenster genutzt und dient als Trennung zwischen umgebenden atmosphärischen Druck und Vakuum auf Prozessgasseite. Das Prozessraum umgebende Bauteil ist der "Ringresonator" und dient der Verteilung der Mikrowellen um den Umfang der Prozesskammer sowie der gleichmäßigen Einkopplung der Energie in diese über Koppelschlitze (Funktion einer Antenne).

So kann nach dem Stand der Technik einlaufseitig z.B. eine "Vortex-Düse" oder Waveguided-Düse eingesetzt werden, dabei handelt es sich z.B. um ein dickwandiges Aluminium Rohr, welches über tangential eingebrachte Bohrungen verfügt. Das Prozessgas wird dadurch auf eine helixförmige Bahn gezwungen. Bei höheren Strömungsgeschwindigkeiten herrscht somit eine höhere Teilchendichte in Prozesskammerwand-Nähe, dadurch soll der direkte Plasmakontakt mit der Wandung verhindert werden und eine Schädigung dieser verhindert werden. Zusätzlich ist die Verweildauer in der Prozesskammer und die Durchmischung besser. Die Plasmaquelle selbst kann mit einer Wasserkühlung ausgestattet sein, um die Einlaufbereiche zu kühlen und auch die Polymerdichtungen am Quarzglas auf kontrollierten Temperaturen zu halten. Im Ringresonator sind kleine Bohrungen eingebracht, welche eine Beobachtung des Plasmas zulassen, grundsätzlich aber der Kühlung des Quarzglases dienen. Bevorzugt wird mit einem externen Gebläse dazu ein Kühlluftstrom über das Quarzglas gezogen.

Als bevorzugte Ausführungsform hat sich eine von unten nach oben gehende Durchströmung der Prozesskammer erwiesen. Die Durchströmungsrichtung vermeidet, dass eventuelle Feststoffe oder Kondensate unbehandelt durch die Plasmaquelle gelangen können.
Unter der erwähnten Kühlfalle 3 wird ein Apparat zum Kühlen des Gasstromes und zum eventuellen Auskondensieren von entsprechenden Inhaltsstoffen z.B. Wasser oder Kohlenwasserstoffen verstanden. Als Ausführungen nach dem Stand der Technik sind Ausführungen als Kühlschwerter mit geringer Oberfläche oder Rohrbündelwärmetauscher möglich. Die Gehäuse sind ebenso gekühlt, die Wärmetauscher sind teils im Betrieb abreinigbar, wie dies grundsätzlich auch aus der schon erwähnten DE 10 2013 000 316 A1 oder der EP 2 209 694 B1 bekannt ist.

Unter einem Abscheider, Filter oder Partikelfilter 4 wird ein Apparat zum Abtrennen von Partikeln aus dem Gasstrom beim Einsatz von großflächigen Stofffiltern verstanden. Es werden meist auch noch Kohlenwasserstoffe an den Filtern abgeschieden, welche sich erst durch staubartige Ablagerungen aus der Gasphase bilden. Hier sind auch kinetische Abscheidungen bekannt, welche Partikel durch ihren Dichteunterschied zum Gasstrom abscheiden, z.B. Zyklone und Zentrifugen.

Die erwähnte Vakuumanlage kann so aufgebaut sein, dass in jedem der in Figur 2 gezeigten drei Zweige jeweils an der Leitung 13 (nach Durchlaufen eines Schließventils) ein Rootsgebläse 5 und daran anschließend eine Schraubenpumpe 6 vorgesehen ist.

Bei dem Rootsgebläse kann es sich um eine hochvolumige Vakuumpumpe handeln, welche nur einen geringen Differenzdruck aufbauen kann.

Bei den erwähnten Schraubenpumpen 6 kann es sich beispielsweise um Vorvakuumpumpen für die Rootsgebläse handeln.

Ferner sind in Figur 2 noch mehrere Druckmessgeräte p an unterschiedlichsten Stellen zugeschaltet, um an den betreffenden Stellen oder Zonen jeweils den aktuellen Druck messen zu können. Ebenso können an unterschiedlichen Stellen noch Temperaturmessgeräte T zugeschaltet sein.

Zur Durchführung des Tests kann einmal das Ventil D geschlossen und die Ventile A.1, A.2 sowie B geöffnet werden, wie aber auch die nachfolgenden Ventile mit der Leitung 12a oder 12b, um die Anlage unter Zuschaltung einer Plasmaquelle 2 zu betreiben und die entsprechenden Messungen bezüglich des Ergebnisses der durchgeführten Entgasung festzuhalten.

Anschließend können die Ventile in der die Plasmaquelle 2 umfassenden Entgasungsleitung 11a geschlossen und das Ventil D in der Bypassleitung 11b geöffnet werden, um den Betrieb im herkömmlichen Sinne durchzuführen und dann die entsprechenden Messungen zu tätigen. Aus diesem Vergleich ergibt sich unmittelbar die deutliche Überlegenheit der Verwendung einer Plasmaquelle.

Dabei wird angemerkt, dass die Verbindungsleitung 15b zwischen den beiden Leitungen 11a, 11b bzw. 12a, 12b nicht zwingend benötigt wird. Bevorzugt wird der Test unter Zuschaltung der Plasmaquelle 2 nur mit einer Kühlfalle 3 und einem Abscheider 4 in einem Leitungsstrang, beispielsweise dem Leitungsstrang 12a durchgeführt, wohingegen die Ventile den in Bypass geschalteten Leitungsstrang 12b sperren und abschalten, ebenso wie das Ventil D die Bypassleitung 11b verschließt. Zum vergleichenden Test von der Abschaltung der Ventile in der Entgasungsleitung 11a und gegebenenfalls der nachfolgenden Leitung 12a kann dann der herkömmliche Betrieb unter Verwendung der in der zweiten Leitung 12a vorgesehenen Kühlfalle 3 und Abscheider 4 durchgeführt werden, um hier die Tests getrennt auswerten zu können. Ansonsten könnte auch nur ein Leitungssystem 12 anstelle der beiden parallel geschalteten Leitungen 12a, 12b vorgesehen sein, so dass unabhängig davon, ob die Plasmaquelle 2 zu- oder abgeschaltet ist, die Abgase stets über die gleiche Kühlfalle 3 und den gleichen Abscheider 4 geleitet werden.

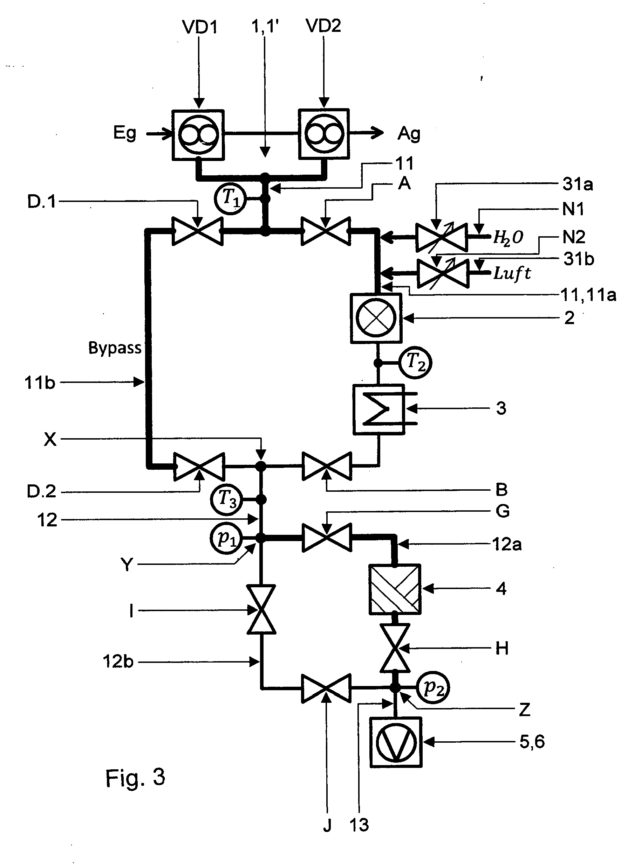

Nachfolgend wird auf Figur 3 Bezug genommen, in der eine erfindungsgemäße Anlage beschrieben und gezeigt ist, die vom Grundsatz her ähnlich wie die Testanlage gemäß Figur 2 aufgebaut ist. Zudem umfasst die Anlage gemäß Figur 3 die Möglichkeit noch andere Reaktionspartner zuzuführen.

Bei der Anlage gemäß Figur 3 ist der in Figur 2 gezeigte Gaskühler 3 unmittelbar der Plasmaquelle 2 nachgeschaltet, nämlich im Leitungsabschnitt 11a. Von daher ist in der nachfolgenden Leitung 12, 12a nur noch der Abscheider oder Filter, insbesondere in Form eines Partikelfilters 4 vorgesehen, wobei diesem Partikelfilter 4 in dem Leitungszweig 12a noch ein Ventil G vor- und ein weiteres Ventil H nachgeschaltet ist, worüber der jeweilige Zweig in Durchströmungsrichtung geöffnet und geschlossen werden kann, so wie bei den anderen erwähnten Ventilen oder Schaltventilen auch. In der dazu vorgesehenen Bypassleitung 12b sind ebenfalls zwei Schaltventile I und J in Reihe geschaltet, obgleich nur ein Schaltventil grundsätzlich notwendig wäre. Zwischen dem Verbindungspunkt X, an dem die Entgasungsleitung 11a und die Bypassleitung 11b zusammengeschaltet sind und dem eingangsseitigen Verzweigungspunkt Y, an welchem die beiden parallel verlaufenden nachfolgenden Leitungs- und Rohrsysteme 12a und 12b verzweigt sind, verläuft im gezeigten Ausführungsbeispiel eine Verbindungsleitung 12. Ausgangsseitig sind an einem Verbindungspunkt Z die beiden Zweig- oder Bypassleitungen 12a, 12b wiederum zusammengeführt und über eine Leitung 13 mit einem Pumpenstand 5, 6 verbunden, der wiederum ein- oder mehrstufig mit parallel und/oder seriell geschalteten Pumpen etc. ausgestattet sein kann.

Die über die Verbindungsleitung 11, 11a mit den Vakuumzonen VD1 und VD2 verbundenen Entgasungsleitung 11a umfasst also (ähnlich wie in den anderen Ausführungsbeispielen) eingangs- und ausgangsseitig jeweils ein Ventil (Schließ- oder Schaltventil) A und B, wobei zwischen diesen beiden Ventilen einmal die Plasmaquelle 2 und dieser in Strömungsrichtung nachgeschaltet ein Kühler 3 vorgesehen ist. In der dazu parallel geschalteten Bypassleitungen 11b ist im gezeigten Ausführungsbeispiel nicht nur ein Ventil D, sondern zwei in Reihe geschaltete Ventile D.1 und D.2 vorgesehen, um diese Leitung entweder zu öffnen oder zu schließen.

Auch bei dieser Anlage gemäß Figur 3 sind an verschiedenen Stellen wieder Druckmessgeräte p beispielsweise p₁ und p₂ sowie Temperaturmessgeräte T, insbesondere T₁, T₂ und T₃ zugeschaltet. Diese Messgeräte können auch an anderen Stellen zusätzlich oder alternativ vorgesehen sein.

Anhand von Figur 3 ist also gezeigt, dass vor der Plasmaquelle 2 die Möglichkeit geschaffen wurde, bei eventuellen fehlenden Reaktionspartnern (unvollständige Oxidation, Bildung von Ruß) über zuschaltbare Anschlüsse N1, N2 zusätzlich Wasserdampf und/oder Luft oder andere Gase einzubringen (plasma based depollution). Reaktionspartner sind hier vor allem das im Material enthaltene Wasser und die mitgeförderte Leckluft. Dadurch werden oxidative Prozesse angeregt. Die vorhandenen Leckagen können auch mit anderen Gasen gezielt beaufschlagt werden, sodass die Reaktion gezielt beeinflusst werden kann z.B. Beaufschlagung des Einzugs mit Kohlenstoffdioxid oder Argon. Zusätzlicher Vorteil hier ist die Vermeidung von oxidativem Abbau der Schmelze. Nachteilig sind die zusätzlichen Kosten für das Gas. Für die beiden erwähnten Anschlüsse 31a und 31b werden bevorzugt in ihrer Durchflussmenge steuerbare Regelventile 33a und 33b verwendet, um die Reaktionspartner dosiert zuzuführen.

Neben dieser Zuführung kann auch das Granulat bzw. Additiv mit Gasen oder Gasgemischen beschleiert werden, das sich ebenfalls positiv auf die Reaktionen in der Plasmaquelle auswirkt (worauf später noch eingegangen wird).

Nach der Plasmaquelle kann, wie erwähnt, optional ein Gaskühler eingebaut werden, damit eventuell in der Plasmaquelle erhitztes Gas abgekühlt werden kann.

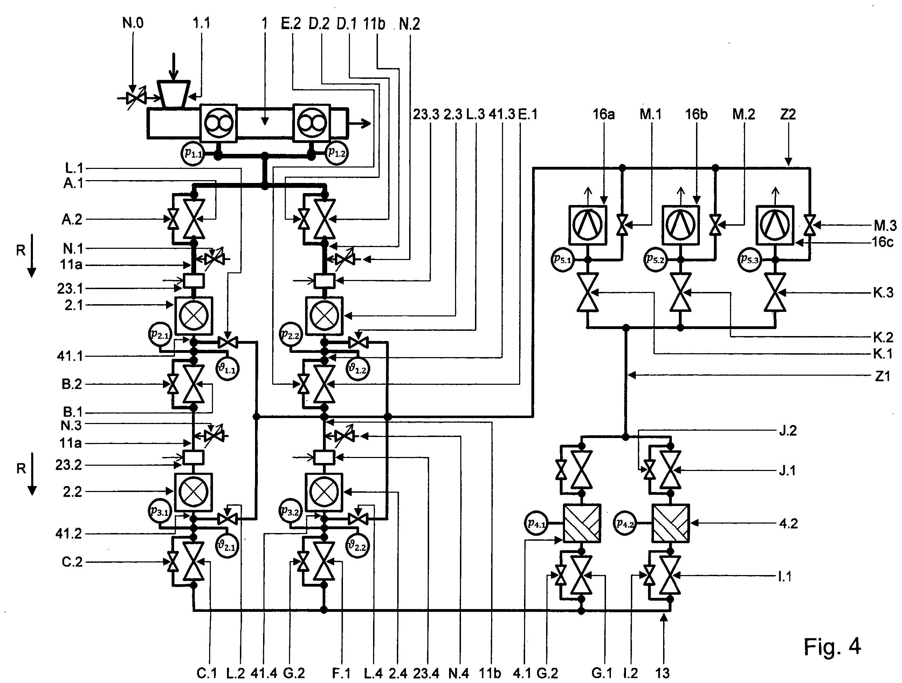

Nachfolgend wird unter Bezugnahme auf Figur 4 auf eine Variante einer redundanten und seriell ausgeführten Produktionsanlage eingegangen.

In Figur 4 ist dazu ein Extruder 1 mit einem Vakuumsystem dargestellt. Dieses Vakuumsystem ist mehrfach redundant aufgebaut. Beispielhaft sind die jeweiligen Plasmaquellenstränge 2.1 und 2.2 sowie 2.3 und 2.4 zweifach vorhanden, ebenso wie die Abscheider 4.1 und 4.2.

Der mehrfache redundante Aufbau ergibt sich also dadurch, dass zum einen zwei parallel geschaltete Zweige mit einem Leitungssystem 11a, 12a und einer dazu parallelen Leitungsanordnung 11b, 12b vorgesehen ist, wobei in jedem der beiden parallel geschalteten, gemeinsam betreibbaren oder alternativ zueinander betreibbaren Strängen jeweils zwei Plasmaquellen 2.1 und 2.2 bzw. 2.3 und 2.4 jeweils in Reihe geschaltet angeordnet ist.

In jedem der beiden Behandlungsstränge mit dem Leitungs- oder Rohrsystem 11a, 12a bzw. mit den dazu parallelen Leitungsanordnungen mit den Leitungsabschnitten 11b und 12b, ist jeweils zu den bereits erwähnten und in jedem Strang vorhandenen Plasmaquellen 2.1 und 2.2 noch eine zweite Plasmaquelle in Reihe geschaltet, nämlich die Plasmaquelle 2.2 in der Leitungsanordnung 11a, 12a und die Plasmaquelle 2.4 in der dazu parallelen Leitungsanordnung 11b, 12b. Entsprechende Schaltventile sind jeweils den Plasmaquellen vor- und nachgeschaltet, vorzugsweise auch in Form von parallelen Schaltventilen (die unterschiedliche Durchströmquerschnitte aufweisen können), um eine besonders dosierte und feine Schaltung oder Umschaltung oder einen besonders feinfühligen Öffnungs- und Schließvorgang durchführen zu können.

Ferner sind drei Pumpstränge 16a bis 16c dargestellt. Die Anzahl der parallelen Systeme dient nur zur Anschauung. Es sind auch weitere parallel geschaltete Pumpenstränge denkbar, um die Ausfallsicherheit zu erhöhen. Die serielle Anordnung der Plasmaquellen erlaubt höhere Leistungen welche durch die Plasmaquelle in das Gas eingebracht werden können sowie durch die zweistufige Ausführung eine gezielte Anregung von Reaktionen. Eine herabgesetzte Leistung in der ersten Plasmaquelle kann somit zur Teiloxidation genutzt werden und nach Zugabe eventueller Prozessgase (z.B. Sauerstoff) in der folgenden Plasmaquelle ganz auf oxidiert werden.

Der Einfülltrichter 1.1 des Extruders 1 ist durch ein regelbares Gaszufuhr-Ventil N.0 ergänzt. Durch dieses kann das im Extruder zu verarbeitende Material mit einem Gas oder Gasgemisch beschleiert werden, welches sich vorzugsweise positiv auf die Materialverarbeitung und die Reaktionen im Plasma auswirkt, z.B. Argon, Stickstoff, Kohlenstoffdioxid, Sauerstoff, Wasserdampf.

Vor den Plasmaquellen 2.1 bis 2.4 sind ebenso regelbare Einrichtungen oder Ventile N.1 bis N.4 vorhanden, durch welche gezielt Gas und/oder Wasserdampf in das Vakuumsystem vor den Plasmaquellen 2 eingebracht werden kann.

Zündeinrichtungen 23.1 bis 23.4, die jeweils in Durchströmrichtung R den jeweiligen Plasmaquellen 2 vorgeschaltet sind, erlauben das Zünden der Plasmaquellen auch außerhalb optimaler Zündbedingungen unter Zuhilfenahme von Hilfsenergie. Ziel ist die Bereitstellung von Ionen (Ladungsträgern), welche die benötigte Zündenergie herabsetzen. Damit ist die Plasmaquelle in der Lage selbst bei nicht optimalen Bedingungen ein Plasma aufzubauen und zu halten.

Die seriell geschalteten Plasmaquellen 2.1 und 2.2 sowie die seriell geschalteten Plasmaquellen 2.3 und 2.4 sind vorzugsweise durch Ventile B.1 und B.2 sowie E.1 und E.2 direkt voneinander getrennt sowie absperrbar, unabhängig vom restlichen Vakuumsystem (bezüglich der Anordnung und Schaltung der weiteren Schaltventile A.1, A.2, C.1, C.2, D.1, D.2, F.1, F.2, G.1, G.2, H.1, H.2, J.1, J.2 sowie den Ventilen K.1 bis K.3 und N.1 bis N.3, wird insbesondere auch auf die Darstellung gemäß Figur 4 verwiesen. Daraus kann entnommen werden, wo die jeweiligen Ventile in Durchströmrichtung angeordnet sind. Dabei gilt diese Anordnung nicht nur für das Ausführungsbeispiel gemäß Figur 4 sondern auch für beliebige Abwandlungen davon. Durch diese Ventile kann jeweils ein Öffnen oder Schließen eines Leitungs- oder Rohrabschnittes bevorzugt vor und/oder hinter einer Komponente (wie z.B. einer Plasmaquelle 2 mit oder ohne vorgeschalteter Zündeinrichtung, eines Filters und/oder einer in der Regel im Rahmen der Erfindung nicht notwendigen Kühlfalle 3 etc.) durchgeführt werden.

Die Abscheider 4.1 und 4.2 enthalten je auch einen Gaskühler (wie weiter oben beschrieben). Auch diese sind durch die Ventile H und G bzw. J und I komplett vom System trennbar und getrennt ansteuerbar.

Die vorgesehenen Pumpen (hier 8.1 bis 8.3) sind durch Ventile K.1 bis K.3 vom Vakuumsystem abgetrennt und können je nach benötigter Saugleistung oder auftretenden Störungen vom Prozessleitsystem zu- oder abgeschaltet werden.

Der laufende Betrieb der Anlage kann so durchgeführt werden, dass beispielsweise die beiden in Reihe geschalteten Plasmaquellen 2.1 und 2.2 durch entsprechende Umsteuerung der in diesem Behandlungsstrang bzw. dieser Behandlungsleitung 11a vorgesehenen Regel- und/oder Schaltventile geöffnet und die entsprechenden Regel- und/oder Schaltventile in der dazu parallel geschalteten Leitung oder Rohrleitung 11b geschlossen sind. Sollte im Betrieb ein Problem an einer oder beiden aktiv geschalteten Plasmaquellen 2.1 und/oder 2.2 auftreten, könnte durch den redundanten Aufbau jederzeit auf die Plasmaquellen 2.3 und 2.4 im zweiten Behandlungszweig 11b durch Öffnen der dort vorgesehenen Regel- und/oder Schaltventile und durch Schließen der im ersten Rohrsystem 11a vorgesehenen Schalt- und/oder Regelventile umgeschaltet werden. Auch in diesem Falle wären bei dem redundanten Aufbau zwei in Reihe geschaltete Plasmaquellen 2.3 und 2.4 aktiv.

Der Aufbau gemäß Figur 4 ist aber auch insoweit redundant aufgebaut, wenn beispielsweise an den zweiten Plasmaquellen 2.2 und/oder 2.4 Probleme auftreten sollten, und eine oder beide dieser Plasmaquellen abgeschaltet werden sollte.

Dazu sind an den Vakuumpumpen zusätzlich angebrachte Ventile M.1 bis M.3 sowie an den Plasmaquellen installierte Ventile L.1 bis L.4 über ein gesondertes Leitungssystem Z2 verbunden und stellen ein Hilfssystem dar. Das erwähnte Leitungssystem Z2 ist dabei an der Eingangsseite der Vakuumstation, also der im gezeigten Ausführungsbeispiel vorgesehenen Pumpenstränge 16a bis 16c zum Aufbau eines Vakuums oder eines Unterdrucks, eingangsseitig angeschlossen, und zwar über die erwähnten Ventile M.1 bis M.3. Dieses Leitungs- oder Rohrsystem Z2 ist entsprechend verzweigt und führt zu den einzelnen Plasmaquellen 2.1 bis 2.4 in Durchströmungsrichtung nachgeordneten Verzweigungspunkten 41.1, 41.2, 41.3 bzw. 41.4, und zwar jeweils über in dem Leitungs- oder Rohrsystem Z2 vor Erreichen der vorstehend genannten Verzweigungspunkte zusätzlich geschaltete Ventile L.1, L.2, L.3 bzw. L.4.

Durch Schließen der Ventile K.1, K.2 bzw. K.3 (oder beispielsweise der den Abscheidern 4.1 und 4.2 unmittelbar vor- und nachgeschalteten Ventile) und Öffnen der Ventile M.1, M.2 und/oder M.3 sowie der den Plasmaquellen zugeordneten Ventile, beispielsweise durch Öffnen der Ventile L.1 und L.3 und Schließen der Ventile L.2 und L.4 kann sichergestellt werden, dass beispielsweise nur die Plasmaquellen 2.1 und 2.3 während des Entgasungsprozesses aktiv sind, wobei die Plasmaquelle 2.2 und 2.4 abgeschaltet und gesperrt sind.

Im Extremfall kann auch noch das Ventil L.1 alternativ zum Ventil L.3 oder umgekehrt geöffnet oder geschlossen werden, so dass zielgerichtet nur noch eine Plasmaquelle aktiv ist, nämlich beispielsweise die Plasmaquelle 2.1 oder 2.3. Auch hierdurch wird der gesamtredundante Aufbau der Anlage weiter erhöht.
Dies erlaubt das gezielte Einstellen eines Drucks an einer vom Hauptvakuumsystem getrennten Plasmaquelle mit einer vom Hauptvakuumsystem getrennten Pumpe. Dadurch kann diese Plasmaquelle z.B. mit abgesenktem Druckniveau, im Vergleich zum Hauptvakuumsystem, gestartet werden. Anschließend können diese bei höherem Druckniveau im Hauptvakuumsystem Z1 betrieben werden. Dieser Zustand kann aber auch zur Funktionskontrolle der Plasmaquelle genutzt werden.

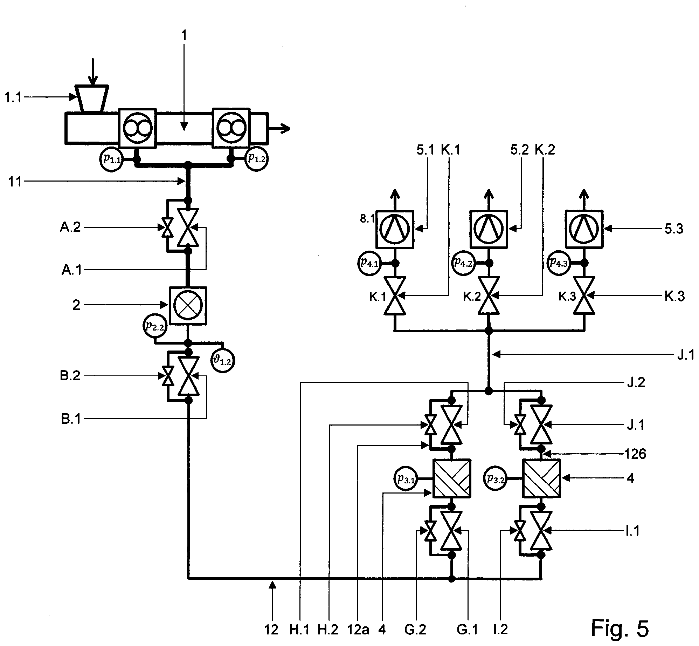

Beispielsweise sind die Ventile A, B, C, G, H, K, M und L (als Einzel-Schaltventile oder als parallel geschaltete Doppel-Ventile ausgebildet, wie in der Zeichnung gemäß Figur 4 mit den einzelnen Ventilen A.1, A.2, B.1, B.2 etc. gezeigt), K.1 und K.2 im Hauptvakuumsystem geöffnet und stellen am Extruder die Absaugung z.B. bei 10 mbar sicher. Mit den aktiven Plasmaquellen 2.1 und 2.2 wird die Reinigung der Abgase durchgeführt. Alle anderen Ventile sind geschlossen. Soll nun der zweite Plasmastrang in Betrieb genommen werden so wird dieser Teil des Systems über eine eigene Pumpe evakuiert. Dazu werden die Ventile L.3 und L.4 sowie M.3 geöffnet und die Plasmaquellen unabhängig vom Hauptvakuumsystem auf z.B. 1 mbar evakuiert da die kritische Feldstärke zur Plasmazündung bei niedrigerem Druck geringer ist. Die Plasmaquellen 2.3 und 2.4 werden gezündet. Nach erfolgreicher Zündung werden die Ventile L.3 und L.4 sowie M.3 geschlossen und die Ventile D.2, E.2 und F.2 geöffnet. Wenn die Drücke p2.2 und p3.2 weitgehend den Drücken p1.1, p1.2 und p4.1 entsprechen so werden auch die Hauptventile D.1, E.1 und F.1 geöffnet. So wird der Gasstrom von beiden Plasmaquellensträngen parallel behandelt.
Nachfolgend wird auf eine abgewandelte Variante unter Bezugnahme auf Figur 5 eingegangen, die ein einfacheres, nicht redundantes System für die Abscheidung zeigt und beschreibt.

Dieses Ausführungsbeispiel gemäß Figur 5 umfasst ein Extrusionsystem 1 mit einer Plasmaquelle 2 sowie ein Abscheidersystem 4 und Vakuumpumpen 5. Die Plasmaquelle 2 ist einfach ausgeführt. Die Abscheidung ist redundant ausgeführt, damit ist bei einem Ausfall der Plasmaquelle der Schutz der Vakuumpumpen sichergestellt. Die Plasmaquelle 2 ist selbständig in der Lage zu Zünden und das Plasma aufrecht zu erhalten. Es sind mehrere Pumpstränge vorhanden, welche je nach Saugleistung Zu- oder Abgeschaltet werden können.

Die Zusammensetzung der Extruderabgase erlaubt eine direkte Behandlung, sodass entweder Totaloxidation der enthaltenen Kohlenwasserstoffe erfolgt, oder eine teilweise Oxidation. Bei einer Teiloxidation oder ähnlichen Reaktionen können Reststoffe zurückbleiben, welche durch die Abscheider aus dem Gasstrom entfernt werden können.

Mit anderen Worten ist dieses Ausführungsbeispiel ähnlich wie die anderen Varianten ausgeführt, jedoch lediglich mit einem Leitungszweig 11, 12 und 13, in welchem mit den entsprechenden Ventilen die Plasmaquelle 2 und die Abscheider 4.1 und 4.2 angeordnet sind. Nicht umfasst ist in dieser Variante die in den anderen Ausführungsbeispielen beschriebene Kühlfalle 3, die bei Bedarf aber auch bei dieser Variante gemäß Figur 5 zugeschaltet sein könnte, beispielsweise direkt hinter dem jeweiligen Abscheider 4.1 und 4.2 im Leitungsabschnitt 12a und 12b direkt vor dem Filter 4.1 bzw. 4.2 zwischen den Ventilen G und H bzw. I und J. Am Ausgang können wiederum eine, zwei oder mehrere (im gezeigten Beispiel drei) Zweige vorgesehen sein, in denen die entsprechenden Vakuumanordnungen zur Durchführung eines Parallelbetriebes oder einzelner Zuschaltung vorgesehen sind. Anstelle der vorstehend erwähnten Ventile G und H bzw. I und J können jeweils auch, wie in allen anderen Ausführungsbeispielen auch, parallel geschaltete Doppel-Ventilanordnungen verwendet werden, beispielsweise wie in Figur 5 gezeigt anstelle des Ventils G zwei parallel geschaltete Ventile G.1 und G.2, anstelle eines Ventils H zwei parallel geschaltete Ventile H.1 und H.2 und entsprechend anstelle der erwähnten Ventile I und J parallel geschaltete Ventile I.1 und I.2 bzw. J.1 und J.2. Ein- oder Beschränkungen bezüglich solcher Abwandlungen bestehen in keinem der gesamten Ausführungsbeispiele oder bei sonstigen, davon abweichenden Anlagentypen.

Zum Starten des Vakuumsystems wird analog der vorangegangenen Beschreibung verfahren. Während dem Betrieb wird je nur ein Abscheiderstrang verwendet. Steigt der Differenzdruck über den Filter an (Differenz p_3.1 und p_4) und überschreitet z.B. 7 mbar (PET) so wird auf den anderen Abscheider umgeschaltet.

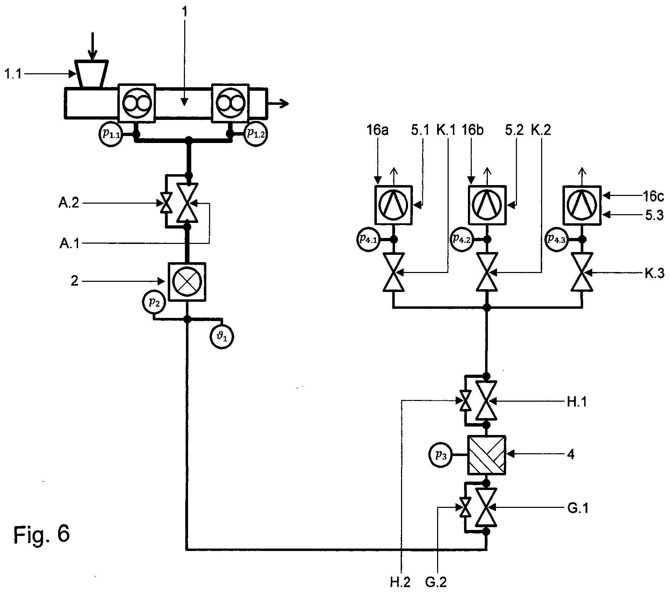

Nachfolgend wird auf eine weitere Variante unter Bezugnahme auf Figur 6 eingegangen, die ein Ausführungsbeispiel mit einer einfachen Plasma-Abreinigung und einem einfachen Abscheidersystem 4 umfasst.

Analog zu den vorhergehenden Ausführungsbeispielen ist also auf einige der anhand der vorhergehenden Ausführungsbeispiele erläuterten Einrichtungen verzichtet worden. Das Abgas des Extruders 1 wird in der Plasmaquelle 2 behandelt und durch den Abscheider 4 geleitet.

Durch die Behandlung mit der Plasmaquelle ist es nicht mehr nötig das Gas im Abscheider 4 zu reinigen. Dieser wird als Gaskühler und Ausfallschutz beibehalten. Zusätzlich ist es möglich bei korrekter Kühlertemperatur (abhängig vom Druck) teilweise Wasser aus dem Gas abzuscheiden und somit die benötigte Saugleistung herabzusetzen.

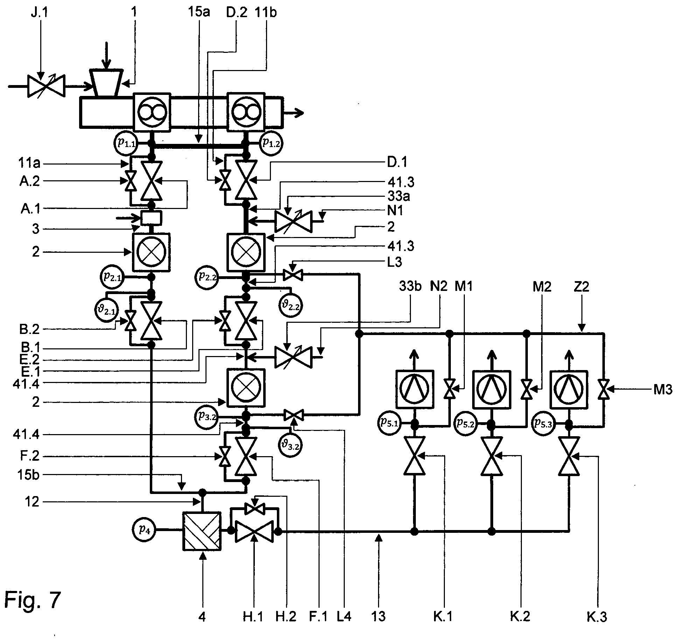

Schließlich ist anhand von Figur 7 eine weitere Abwandlung gezeigt, bei der die Anlage auch zur Erhöhung der Redundanz parallel ausgelegt ist, nämlich mit zwei Leitungszweigen 11a und 11b und einem parallel geschalteten Leitungszweig 11b, die bei zwei Vakuumzonen VD1 und VD2 noch durch eine Zwischenleitung 15a miteinander verbunden sind. Durch Abschaltung jeweils eines Zweiges (durch Schließen der dort vorgesehenen Ventile) und Öffnen des Parallelzweiges kann dabei jeweils über einen zugeschalteten Zweig mit zumindest einer Plasmaquelle eine Verbindung zu jeder der vorgesehenen Entgasungszonen VD1, VD2 hergestellt werden.

Sind an einer Plasmastation oder an einem System in einem Zweig Wartungsarbeiten durchzuführen, kann der Betrieb jeweils durch Zuschalten des parallel geschalteten zweiten Entgasungszweiges weiter aufrechterhalten werden.

Am Ende sind die beiden Zweige über eine Verbindungsleitung 15b mit einer gemeinsamen Abführleitung mit dem Abscheider/Filter 4 verbunden, sofern nicht in jedem Zweig ein separater Filter vorgesehen ist.

Wie bereits erwähnt könnte auch noch ein oder in jedem Zweig getrennt jeweils ein Kühlfilter 3 und/oder eine Zündeinrichtung 3' vorgeschaltet sein.

Anhand von Figur 7 ist dabei auch gezeigt, dass die gesamte Behandlung der durchströmenden Abgase noch dadurch verbessert und gesteigert werden kann, wenn in einem entsprechenden Zweig 11b (dargestellt bei Figur 7 an dem rechten Zweig 11b) zwei Plasmastationen zusätzlich in Reihe (Serie) geschaltet sind. Diese Reihen- oder Serienschaltung könnte aber auch in beiden Zweigen, abweichend von Figur 7, vorgesehen sein. Auch hier sind wieder den einzelnen Komponenten, wie beispielsweise der jeweiligen Plasmaquelle 2, dem Abscheider 4 etc., entsprechende Einzel-Ventile oder parallel geschaltete Doppel-Ventile, wie bereits mehrfach erörtert, zumindest vor- und/oder nachgeschaltet oder bevorzugt jeweils vor- und nachgeschaltet. Entsprechende Einzel- oder Doppel-Ventile können auch den einzelnen Pumpstationen vorgeschaltet sein. Das gleiche gilt auch für das zusätzlich vorgesehene Leitungssystem Z2, welches vom Eingang der Pumpstation kommend eine Verbindungsleitung beispielsweise über Schaltventile M.1 bis M.3 zumindest zu einer Entgasungsleitung (beispielsweise Entgasungsleitung 11b) herstellt. Die Verbindung erfolgt über eine verzweigte Leitungsanordnung, deren Anschlussstellen jeweils an Verbindungspunkten 41.3 bzw. 41.4 an der Entgasungsleitung 11 vorgesehen sind, die jeweils in Strömungsrichtung der jeweiligen Plasmaquelle 2 nachgeordnet sind.

Nachfolgend wird auf den Verfahrensablauf entsprechend der Anlagen näher eingegangen.

Um im automatischen Betrieb sicherzustellen, dass alle Extruderabgase behandelt werden, soll die Plasmaquelle 2 in Gasflussrichtung direkt nach dem Extruder 1 eingesetzt werden. Beim Starten der Vakuumsystems wird das Vakuumsystem inklusive der Plasmaquelle 2 evakuiert. Um große Druckstöße zu vermeiden, werden im erfinderischen System die Ventile zweistufig aufgebaut. Anfangs wird ein Bypassventil mit verringertem Querschnitt (Ventile B.2 und F.2) geöffnet, bis die angrenzenden Leitungen annähernd gleiches Druckniveau haben und danach werden erst die Hauptventile geöffnet (Ventile B.1 und F.1). Der Einsatz eines Bypasses mit einem Rohrdurchmesser von z.B. 15 mm erlaubt ein langsameres Ausgleichen des Drucks der beiden angrenzenden Volumina. Dadurch werden starke Druckstöße vermieden, welche bei einem schlagartigen Öffnen der Hauptventile mit einem Durchmesser von z.B. 100 mm auftreten würden. Wenn der Extruder in Betrieb geht, wird die Plasmaquelle gezündet. Anschließend wird das Bypassventil A.2 zum Evakuieren der Vakuumdome geöffnet. Ist der Druck an den Domen annähernd gleich dem Vakuumsystemdruck, so öffnet das Hauptventil A.1.

Im Betrieb muss die Funktion der Plasmaquelle 2 überwacht werden um bei einem eventuellen Fehler reagieren zu können. Dabei wird durch die Einrichtungen der Plasmaquelle oder durch ein zusätzliches System überwacht, dass das Plasma aktiv ist. Um ein Zünden sicher zu stellen, kann es nötig werden ein zusätzliches Zündsystem 3' zu benutzen. Dieses soll Zündbedingungen in der Plasmaquelle 2 schaffen. Denkbar sind hier zusätzliche Vakuumleitungen, welche ein unabhängiges Druckniveau in der Plasmaquelle im Vergleich zum Restsystem erlauben (K.1-K.3 und M.1-M.3). Sollte eine Vorionisierung des Gases in der Plasmaquelle von Nöten sein, so kann dies durch eine Hochspannungszündung oder eine andere Hilfsenergie erfolgen (z.B. Zündkerze 23 im Gasstrom vor der Plasmaquelle) .

Als Abschaltbedingungen werden zu hoher Druck oder zu hohe Temperatur angesehen. Diese werden direkt nach der Plasmaquelle überwacht. Ein zu hoher Druck an der Plasmaquelle kann bei einem Defekt am Vakuumsystem entstehen z.B. auftretende Leckage, falsche Zuführung von zusätzlichem Prozessgas, das Zusetzen des Filters oder defekten Vakuumpumpen. Erhöhte Temperaturen sind ebenso durch erhöhte Gasströme möglich.

Sobald beispielsweise der Druck am Vakuumdom p₁ weit außerhalb produktionstypischer Grenzwerte liegt (z.B. ≥ 30 mbar) wird auch der Extruder abgeschalten.

Durch in Serie schalten von mehreren Plasmaquellen kann die Umsetzung der durchströmenden Abgase nochmals gesteigert werden, bzw. kann hier an jeder Position vor oder nach einer Plasmaquelle der Ablauf der Reaktionen durch Hinzugabe von zusätzlichen Gasen beeinflusst werden (siehe Reaktionspartner).

Für die Entgasung am Extruder ist der Druck am Vakuumdom entscheidend dieser kann als Verfahrensgröße vorgegeben werden. Das Prozessleitsystem sorgt für eine ausreichende Saugleistung der Pumpen und regelt den Vakuumdruck auf den gewünschten Wert aus. Die Plasmaquelle muss diesen Umgebungsbedingungen angepasst werden, sodass der Betrieb sichergestellt ist (z.B. Anpassen der Tuner bei Mikrowellen Plasmaquellen, mechanisch oder manuell). Eine Leistungsanpassung der in den Gasstrom eingebrachten Energie kann vorteilhaft für den Energieverbrauch der Anlage sowie für die Anregung bestimmter Reaktionen sein und sollte vorhanden sein. Auch ist der Leistungsbedarf vom Gasstrom abhängig und damit auch vom Ausstoß des Extruders und dem Zustand des zu verarbeitenden Materials.

Als Regelkriterium für den Verfahrensablauf, wird der Druck am Vakuumdom (vor dem Filter P₁) und an der Pumpe (nach dem Filter p₂) erfasst.

Zusätzlich ist für den Automatischen Betrieb wichtig, dass sich die Plasmaquelle selbstständig an veränderte Umgebungsvariablen anpasst.

Erfindungsgemäß wird abhängig vom Vakuumdruck der Tuner im Mikrowellensystem automatisiert eingestellt. Der Druckmesswert wird der Plasmaquelle vom PPS-System übergeben.

## Patentansprüche

1. Verfahren zum Entgasen von Polymerschmelzen und zur Neutralisierung der dabei entstehenden Schadstoffe, mit folgenden Verfahrensschritten:
- es wird mittels einer Vakuumanlage ein Unterdruck oder ein Vakuum erzeugt,
- der Unterdruck oder das Vakuum wird einer Entgasungszone zugeführt, in der sich die Polymerschmelze befindet,
- die durch die Vakuumanlage aus der Entgasungszone (VD; VD1, VD2) entfernten oder abgesaugten Schadstoffe in Form von Abgasen oder Abgasen und flüssigen und/oder festen Komponenten werden in einer nachfolgenden Filterstufe und/oder einem Abscheider (4; 4.1, 4.2) ausgeschieden,
- die Schadstoffe werden nach Entfernen aus der Entgasungszone (VD; VD1, VD2) einer Plasmaquelle (2; 2.1, 2.2, 2.3, 2.4) zugeführt, die so aufgebaut und/oder ausgebildet ist, dass in der Plasmaquelle (2; 2.1, 2.2, 2.3, 2.4) die Schadstoffe ganz oder teilweise in einen Plasma-Aggregatszustand überführt werden,
- die Schadstoffe werden nach Entfernen aus der Entgasungszone (VD; VD1, VD2) der Plasmaquelle (2; 2.1, 2.2, 2.3, 2.4) vor Zuführung zu einem Filter oder zu einem Abscheider (4; 4.1, 4.2) zugeführt
- den Schadstoffen werden Prozessgase zugeführt, die Außenluft, Wasserdampf und/oder Kohlendioxid umfassen,
**gekennzeichnet durch** die folgenden weiteren Merkmale:
- die aus der Entgasungszone (VD; VD1, VD2) entfernten und der Plasmaquelle (2; 2.1, 2.2, 2.3, 2.4) zugeführten Schadstoffe werden über ein Rohrleitungssystem fortbewegt, welches zur Vermeidung von Abscheidungen auf zumindest 150°C erhitzt wird,
- es werden einzelne oder mehrere Plasmaquellen (2; 2.1, 2.2, 2.3, 2.4) verwendet, die über in Entgasungsleitungen (11, 11a, 11b, 12, 12a, 12b, 13) vorgesehene Schaltventile (A.1, A.2, B.1, B.2, C.1, C.2, D.1, D.2, E.1, E.2, F.1, F.2) zu- oder abschaltbar sind, und
- die Schaltventile (A.1, A.2, B.1, B.2, C.1, C.2, D.1, D.2, E.1, E.2, F.1, F.2) werden den Plasmaquellen (2; 2.1, 2.2, 2.3, 2.4) in Form von parallelen Schaltventilen (A.1, A.2, B.1, B.2, C.1, C.2, D.1, D.2, E.1, E.2, F.1, F.2) mit unterschiedlichen Durchströmquerschnitten vor- und nachgeschaltet.

2. Verfahren nach Anspruch 1, **dadurch gekennzeichnet, dass** den Schadstoffen vor Zuführung zu der Plasmaquelle (2; 2.1, 2.2, 2.3, 2.4) oder während der Zuführung in die Plasmaquelle (2; 2.1, 2.2, 2.3, 2.4) weitere Prozessgase zusätzlich zugeführt werden.

3. Verfahren nach Anspruch 2, **dadurch gekennzeichnet, dass** die den Schadstoffen zugeführten Prozessstoffe ferner Sauerstoff, Stickstoff und/oder Argon umfassen.

4. Verfahren nach einem der Ansprüche 1 bis 3, **dadurch gekennzeichnet, dass** die Schadstoffe in der Plasmaquelle (2; 2.1, 2.2, 2.3, 2.4) unter Zuführung von Energie in den Plasma-Aggregatzustand überführt werden, insbesondere durch thermische Anregung, durch elektromagnetische Strahlung einschließlich Laserstrahlung, durch elektrostatische und/oder elektromagnetische Felder und/oder durch elektrische Wechselfelder, durch induktive Anregung und/oder mittels Mikrowellen erzeugt werden.

5. Verfahren nach einem der Ansprüche 1 bis 4, **dadurch gekennzeichnet, dass** die aus der Entgasungszone (VD; VD1, VD2) entfernten und der Plasmaquelle (2; 2.1, 2.2, 2.3, 2.4) zugeführten Schadstoffe über ein Rohrleitungssystem fortbewegt werden, welches zur Vermeidung von Abscheidungen auf zumindest 200°C erhitzt wird.

6. Verfahren nach einem der Ansprüche 1 bis 5, **dadurch gekennzeichnet, dass** die Schadstoffe zwischen der Entgasungszone (VD; VD1, VD2) und der Plasmaquelle (2; 2.1, 2.2, 2.3, 2.4) auf einen Temperaturbereich von 150°C bis 300°C, insbesondere auf 200°C bis 300°C erwärmt werden.

7. Verfahren nach einem der Ansprüche 1 bis 6, **dadurch gekennzeichnet, dass** jede Oberfläche im Vakuumsystem vor der Plasmaquelle, der Abscheidung oder den Filtern beheizt wird.

8. Verfahren nach einem der Ansprüche 1 bis 7, **dadurch gekennzeichnet, dass** die Schadstoffe mehreren hintereinander geschalteten Plasmaquellen (2; 2.1, 2.2, 2.3, 2.4) zur Erzeugung eines plasmaförmigen Zustandes zugeführt werden.

9. Verfahren nach einem der Ansprüche 1 bis 8, **dadurch gekennzeichnet, dass** mehrere Plasmaquellen (2; 2.1, 2.2, 2.3, 2.4) parallel zueinander zugeschaltet sind, um während des laufenden Prozesses eine Umschaltung von einer Plasmaquelle (2; 2.1, 2.2, 2.3, 2.4) auf eine davon getrennte zweite Plasmaquelle (2; 2.1, 2.2, 2.3, 2.4) durchzuführen.

10. Verfahren nach einem der Ansprüche 1 bis 9, **dadurch gekennzeichnet, dass** mehrere Plasmaquellen (2; 2.1, 2.2, 2.3, 2.4) vorgesehen sind, die teils seriell und teils parallel zueinander betrieben werden.

11. Verfahren nach einem der Ansprüche 1 bis 10, **dadurch gekennzeichnet, dass** eine Plasmaquelle (2; 2.1, 2.2, 2.3, 2.4) verwendet wird, die so ausgebildet ist, dass in ihr die Schadstoffe zu zumindest 20%, insbesondere zu zumindest 30%, 40%, 50%, 60%, 70% oder zumindest zu 80% oder zumindest zu 90% in einen Plasma-Aggregatzustand überführt werden.

12. Vorrichtung zum Entgasen von Polymerschmelzen und zur Neutralisierung der dabei entstehenden Abgase, mit folgenden Merkmalen:
- es ist eine Vakuumanlage (5, 6) vorgesehen, worüber ein Unterdruck oder ein Vakuum erzeugbar ist,
- es ist ein Leitungs- und/oder Rohrsystem vorgesehen, worüber der Unterdruck und/oder das Vakuum eine Entgasungszone (VD; VD1, VD2) zur Entgasung einer in dieser Entgasungszone befindlichen Polymerschmelze zuführbar ist,
- es ist zumindest eine Filter- und/oder Abscheiderstufe (4; 4.1, 4.2) vorgesehen, worüber die durch die Vakuumanlage aus der Entgasungszone (VD; VD1, VD2) entfernbaren oder absaugbaren Schadstoffe in Form von Abgasen oder gasförmigen und/oder flüssigen und/oder festen Komponenten ausscheidbar sind,
- der Entgasungszone (VD; VD1, VD2) nachgeordnet ist zumindest eine Plasmaquelle (2; 2.1, 2.2, 2.3, 2.4), in der die aus der Entgasungszone (VD; VD1, VD2) entfernbaren Schadstoffe in einen Plasma-Aggregatzustand überführbar sind,
- die Filter- und/oder Abscheiderstufe (4; 4.1, 4.2) ist der Plasmaquelle (2; 2.1, 2.2, 2.3, 2.4) nachgeordnet,
- die Vorrichtung weist in Durchströmrichtung der Abgase eine der Plasmaquelle (2; 2.1, 2.2, 2.3, 2.4) vorgelagerte Anschlusseinrichtung (N1, N2) zur Zuführung von Prozessgasen auf,
- dem zumindest einen Anschluss (N1, N2) ist eine Rohrleitung oder ein Behälter zur Zuführung von Prozessgasen vorgeschaltet, nämlich in Form von Außenluft, Wasserdampf und/oder Kohlendioxid,
**gekennzeichnet durch** die folgenden weiteren Merkmale:
- die von der Entgasungszone (VD; VD1, VD2) zu der zugehörigen Plasmaquelle (2; 2.1, 2.2, 2.3, 2.4) führenden Leitungen oder die die Schadstoffe an die Plasmaquelle weiterleitenden Rohre sind mittels einer thermischen Isolierung und/oder Heizeinrichtung versehen sind, worüber das Rohrsystem auf zumindest 150°C aufgeheizt wird,
- einzelne oder mehrere Plasmaquellen (2; 2.1, 2.2, 2.3, 2.4) sind über in Entgasungsleitungen (11, 11a, 11b, 12, 12a, 12b, 13) vorgesehene Schaltventile (A.1, A.2, B.1, B.2, C.1, C.2, D.1, D.2, E.1, E.2, F.1, F.2) zu- oder abschaltbar, und
- die Schaltventile (A.1, A.2, B.1, B.2, C.1, C.2, D.1, D.2, E.1, E.2, F.1, F.2) sind den Plasmaquellen (2; 2.1, 2.2, 2.3, 2.4) in Form von parallelen Schaltventilen (A.1, A.2, B.1, B.2, C.1, C.2, D.1, D.2, E.1, E.2, F.1, F.2) mit unterschiedlichen Durchströmquerschnitten vor- und nachgeschaltet.

13. Vorrichtung nach Anspruch 12, **dadurch gekennzeichnet, dass** dem zumindest einen Anschluss (N1, N2) eine Rohrleitung oder ein Behälter zur weiteren Zuführung von Prozessgasen in Form von Sauerstoff, Stickstoff und/oder Argon vorgeschaltet ist.

14. Vorrichtung nach Anspruch 12 oder 13, **dadurch gekennzeichnet, dass** die zumindest eine Plasmaquelle (2; 2.1, 2.2, 2.3, 2.4) so aufgebaut ist, dass die hier durchströmenden Schadstoffe unter Zuführung von Energie in den Plasma-Aggregatzustand überführbar sind, insbesondere durch Zuführung von thermischer Anregung, durch elektromagnetische Strahlung einschließlich Laserstrahlung, durch elektrostatische und/oder elektromagnetische Felder und/oder durch elektrische Wechselfelder, durch induktive Anregung und/oder mittels Mikrowellen.

15. Vorrichtung nach einem der Ansprüche 12 bis 14, **dadurch gekennzeichnet, dass** die von der Entgasungszone (VD; VD1, VD2) zu der zugehörigen Plasmaquelle (2; 2.1, 2.2, 2.3, 2.4) führenden Leitungen oder die Schadstoffe an die Plasmaquelle weiterleitenden Rohre mittels einer thermischen Isolierung und/oder Heizeinrichtung versehen sind, worüber das Rohrsystem auf zumindest 200°C aufgeheizt wird.

16. Vorrichtung nach einem der Ansprüche 12 bis 15, **dadurch gekennzeichnet, dass** die von der Entgasungszone (VD; VD1, VD2) zu der zumindest einen Plasmaquelle (2; 2.1, 2.2, 2.3, 2.4) führenden, von den Schadstoffen durchströmbaren Leitungen oder Rohre mit einem Aufheizsystem zur Erhitzung der Rohre auf einen Temperaturereich von zumindest 150° bis 300°, insbesondere auf 200°C bis 300°C versehen und/oder ummantelt sind.

17. Vorrichtung nach einem der Ansprüche 12 bis 16, **dadurch gekennzeichnet, dass** die Vorrichtung so ausgebildet ist, dass jede Oberfläche im Vakuumsystem vor der Plasmaquelle, der Abscheidung oder den Filtern beheizt wird.

18. Vorrichtung nach einem der Ansprüche 12 bis 17, **dadurch gekennzeichnet, dass** mehrere in Reihe geschaltete Plasmaquelle (2; 2.1, 2.2, 2.3, 2.4) vorgesehen sind.

19. Vorrichtung nach einem der Ansprüche 12 bis 18, **dadurch gekennzeichnet, dass** mehrere Plasmaquelle (2; 2.1, 2.2, 2.3, 2.4) parallel zueinander verschaltet sind.

20. Vorrichtung nach einem der Ansprüche 12 bis 19, **dadurch gekennzeichnet, dass** von der zumindest einen zwischen zumindest einer Entgasungszone (VD; VD1, VD2) und zumindest einer Pumpstation (5, 6) verlaufenden Leitung und/oder Rohr (11a, 11b; 12a, 12b; 13) mit hierin in serieller Anordnung verschalteten Plasmaquellen (2; 2.1, 2.2, 2.3, 2.4) zumindest eine zusätzliche Leitung (Z2) abzweigt, und zwar von einer Verzweigungsstelle (41.1, 41.2, 41.3, 41.4) zwischen zwei in Reihe geschalteten Plasmaquellen (2; 2.1, 2.2, 2.3, 2.4), wobei diese Verzweigungsstelle (41.1, 41.2, 41.3, 41.4) über zugehörige Schaltventile (L.1 bis L.4; M.1 bis M.3) mit der Eingangs- und/oder Saugseite der zumindest einen Pumpstation (5, 6) verbunden ist.

21. Vorrichtung nach einem der Ansprüche 12 bis 20, **dadurch gekennzeichnet, dass** einer jeweiligen Plasmaquelle (2; 2.1, 2.2, 2.3, 2.4) eine Startereinrichtung (23; 23.1, 23.2, 23.3, 23.4) vorgeschaltet ist.

22. Vorrichtung nach einem der Ansprüche 12 bis 21, **dadurch gekennzeichnet, dass** in den Leitungen (11; 11a, 11b; 12; 12a, 12b; 13) eine oder mehrere Schmelzefallen zur Vermeidung des Eindringens von Schmelze aus der Plastifizierungseinheit in die Vakuumeinheit vorgesehen sind.

23. Vorrichtung nach einem der Ansprüche 12 bis 22, **dadurch gekennzeichnet, dass** zumindest einer oder einigen Plasmaquellen (2; 2.1, 2.2, 2.3, 2.4) Prozessgase über eine Vortex-Düse oder eine Waveguided-Düse zuführbar sind.

24. Vorrichtung nach einem der Ansprüche 12 bis 23, **dadurch gekennzeichnet, dass** die Vakuumanlage (5, 6) zumindest eine Vakuumpumpe, zumindest ein Roots-Gebläse und/oder zumindest eine Schraubenpumpe (6) umfasst.

25. Vorrichtung nach einem der Ansprüche 12 bis 24, **dadurch gekennzeichnet, dass** die Schaltventile (A.1, A.2, B.1, B.2, C.1, C.2, D.1, D.2, E.1, E.2, F.1, F.2) als parallel geschaltete Doppel-Ventile (A.1, A.2, B.1, B.2, C.1, C.2, D.1, D.2, E.1, E.2, F.1, F.2) ausgebildet sind.

26. Vorrichtung nach einem der Ansprüche 12 bis 25, **dadurch gekennzeichnet, dass** die Vorrichtung kühlfallenfrei ausgebildet ist.

27. Vorrichtung nach einem der Ansprüche 12 bis 26, **dadurch gekennzeichnet, dass** die Plasmaquelle (2; 2.1, 2.2, 2.3, 2.4) so ausgebildet ist, dass die der Plasmaquelle (2; 2.1, 2.2, 2.3, 2.4) zugeführten Schadstoffe zumindest zu 20%, insbesondere zu zumindest 30%, 40%, 50%, 60%, 70%, 80% oder zu zumindest 90% in den Plasma-Aggregatzustand überführbar sind.

## Claims

1. Method for degassing polymer melts and for neutralising the pollutants formed thereby, comprising the following method steps:
- a low pressure or a vacuum is generated by means of a vacuum system,
- the low pressure or vacuum is fed to a degassing zone in which the polymer melt is situated,
- the pollutants in the form of waste gases or waste gases and liquid and/or solid components removed or withdrawn from the degassing zone (VD; VD1, VD2) by the vacuum system are separated in a downstream filtering stage and/or a separator (4; 4.1, 4.2),
- after being removed from the degassing zone (VD; VD1, VD2), the pollutants are fed to a plasma source (2; 2.1, 2.2, 2.3, 2.4) which is so constructed and/or designed that the pollutants are converted wholly or in part into a plasma state of aggregation in the plasma source (2; 2.1, 2.2, 2.3, 2.4),
- after being removed from the degassing zone (VD; VD1, VD2), the pollutants are fed to the plasma source (2; 2.1, 2.2, 2.3, 2.4) before being fed to a filter or to a separator (4; 4.1, 4.2),
- process gases including external air, water vapour, and/or carbon dioxide are fed to the pollutants,
**characterised by** the following further features:
- the pollutants removed from the degassing zone (VD; VD1, VD2) and fed to the plasma source (2; 2.1, 2.2, 2.3, 2.4) are conveyed via a pipeline system which is heated to at least 150°C in order to avoid deposits,
- individual or a plurality of plasma sources (2; 2.1, 2.2, 2.3, 2.4) which can be connected in or shut off via switch valves (A.1, A.2, B.1, B.2, C.1, C.2, D.1, D.2, E.1, E.2, F.1, F.2) provided in degassing lines (11, 11a, 11b, 12, 12a, 12b, 13) are used,and
- the switch valves (A.1, A.2, B.1, B.2, C.1, C.2, D.1, D.2, E.1, E.2, F.1, F.2) are connected upstream and downstream of the plasma sources (2; 2.1, 2.2, 2.3, 2.4) in the form of parallel switch valves (A.1, A.2, B.1, B.2, C.1, C.2, D.1, D.2, E.1, E.2, F.1, F.2) with different flow cross sections.

2. Method according to claim 1, **characterised in that** further process gases are additionally fed to the pollutants before they are fed to the plasma source (2; 2.1, 2.2, 2.3, 2.4), or as they are being fed into the plasma source (2; 2.1, 2.2, 2.3, 2.4).

3. Method according to claim 2, **characterised in that** the process substances fed to the pollutants also include oxygen, nitrogen, and/or argon.

4. Method according to any of claims 1 to 3, **characterised in that** the pollutants are converted into the plasma state of aggregation in the plasma source (2; 2.1, 2.2, 2.3, 2.4) with the supply of energy, in particular by thermal excitation, by electromagnetic radiation including laser radiation, by electrostatic and/or electromagnetic fields and/or by alternating electrical fields, by inductive excitation, and/or by means of microwaves.

5. Method according to any of claims 1 to 4, **characterised in that** the pollutants removed from the degassing zone (VD; VD1, VD2) and fed to the plasma source (2; 2.1, 2.2, 2.3, 2.4) are conveyed via a pipeline system which is heated to at least 200°C in order to avoid deposits.

6. Method according to any of claims 1 to 5, **characterised in that** the pollutants are heated to a temperature range of from 150°C to 300°C, in particular to from 200°C to 300°C, between the degassing zone (VD; VD1, VD2) and the plasma source (2; 2.1, 2.2, 2.3, 2.4).

7. Method according to any of claims 1 to 6, **characterised in that** the separation or the filtering is heated in each vacuum system surface upstream of the plasma source.

8. Method according to any of claims 1 to 7, **characterised in that** the pollutants are fed to a plurality of plasma sources (2; 2.1, 2.2, 2.3, 2.4) connected one behind the other in order to generate a plasma-like state.

9. Method according to any of claims 1 to 8, **characterised in that** a plurality of plasma sources (2; 2.1, 2.2, 2.3, 2.4) are connected in parallel with one another in order to switch from one plasma source (2; 2.1, 2.2, 2.3, 2.4) to a second plasma source (2; 2.1, 2.2, 2.3, 2.4) that is separate therefrom while the process is running.

10. Method according to any of claims 1 to 9, **characterised in that** a plurality of plasma sources (2; 2.1, 2.2, 2.3, 2.4) which are operated in part in series and in part in parallel with one another are provided.

11. Method according to any of claims 1 to 10, **characterised in that** a plasma source (2; 2.1, 2.2, 2.3, 2.4) is used which is in such a form that the pollutants are converted into a plasma state of aggregation therein to the extent of at least 20%, in particular to the extent of at least 30%, 40%, 50%, 60%, 70% or to the extent of at least 80%, or to the extent of at least 90%.

12. Device for degassing polymer melts and for neutralising the waste gases formed thereby, having the following features:
- a vacuum system (5, 6) is provided, via which a low pressure or a vacuum can be generated,
- a line and/or pipe system is provided, via which the low pressure and/or vacuum can be fed to a degassing zone (VD; VD1, VD2) for degassing a polymer melt situated in the degassing zone,
- at least one filter and/or separator stage (4; 4.1, 4.2) is provided, via which the pollutants which can be removed or withdrawn by means of the vacuum system from the degassing zone (VD; VD1, VD2) in the form of waste gases, or gaseous and/or liquid, and/or solid components can be discharged,
- downstream of the degassing zone (VD; VD1, VD2) there is arranged at least one plasma source (2; 2.1, 2.2, 2.3, 2.4) in which the pollutants able to be removed from the degassing zone (VD; VD1, VD2) can be converted into a plasma state of aggregation,
- the filter and/or separator stage (4; 4.1, 4.2) is arranged downstream of the plasma source (2; 2.1, 2.2, 2.3, 2.4),
- the device comprises, upstream of the plasma source (2; 2.1, 2.2, 2.3, 2.4) in the flow direction of the waste gases, a connection device (N1, N2) for the feeding of process gases,
- a pipeline or a container for the feeding of process gases, namely in the form of external air, water vapour, and/or carbon dioxide, is connected upstream of the at least one connection (N1, N2),
**characterised by** the following further features:
- the lines leading from the degassing zone (VD; VD1, VD2) to the associated plasma source (2; 2.1, 2.2, 2.3, 2.4) or the pipes conveying the pollutants to the plasma source are provided with thermal insulation and/or a heating device, via which the pipe system is heated to at least 150°C,
- individual or a plurality of plasma sources (2; 2.1, 2.2, 2.3, 2.4) can be connected in or shut off via switch valves (A.1, A.2, B.1, B.2, C.1, C.2, D.1, D.2, E.1, E.2, F.1, F.2) provided in degassing lines (11, 11a, 11b, 12, 12a, 12b, 13), and
- the switch valves (A.1, A.2, B.1, B.2, C.1, C.2, D.1, D.2, E.1, E.2, F.1, F.2) are connected upstream and downstream of the plasma sources (2; 2.1, 2.2, 2.3, 2.4) in the form of parallel switch valves (A.1, A.2, B.1, B.2, C.1, C.2, D.1, D.2, E.1, E.2, F.1, F.2) with different flow cross sections.

13. Device according to claim 12, **characterised in that** a pipeline or a container for the further feeding of process gases in the form of oxygen, nitrogen, and/or argon is connected upstream of the at least one connection (N1, N2).

14. Device according to claim 12 or 13, **characterised in that** the at least one plasma source (2; 2.1, 2.2, 2.3, 2.4) is so constructed that the pollutants flowing through it can be converted into the plasma state of aggregation by the supply of energy, in particular by the supply of thermal excitation, by electromagnetic radiation including laser radiation, by electrostatic and/or electromagnetic fields, and/or by alternating electrical fields, by inductive excitation, and/or by means of microwaves.

15. Device according to any of claims 12 to 14, **characterised in that** the lines leading from the degassing zone (VD; VD1, VD2) to the associated plasma source (2; 2.1, 2.2, 2.3, 2.4) or the pipes conveying the pollutants to the plasma source are provided with thermal insulation and/or a heating device, via which the pipe system is heated to at least 200°C.

16. Device according to any of claims 12 to 15, **characterised in that** the lines or pipes leading from the degassing zone (VD; VD1, VD2) to the at least one plasma source (2; 2.1, 2.2, 2.3, 2.4) and through which the pollutants can flow are provided with and/or surrounded by a heating system for heating the pipes to a temperature range of from at least 150°C to 300°C, in particular to from 200°C to 300°C.

17. Device according to any of claims 12 to 16, **characterised in that** the device is so designed that the separation or the filtering is heated in each vacuum system surface upstream of the plasma source.

18. Device according to any of claims 12 to 17, **characterised in that** a plurality of plasma sources (2; 2.1, 2.2, 2.3, 2.4) connected in series are provided.

19. Device according to any of claims 12 to 18, **characterised in that** a plurality of plasma sources (2; 2.1, 2.2, 2.3, 2.4) are connected in parallel with one another.

20. Device according to any of claims 12 to 19, **characterised in that** at least one additional line (Z2) branches from the at least one line and/or pipe (11a, 11b; 12a, 12b; 13) running between at least one degassing zone (VD; VD1, VD2) and at least one pumping station (5, 6) with plasma sources (2; 2.1, 2.2, 2.3, 2.4) connected in a serial arrangement therein, namely from a branching point (41.1, 41.2, 41.3, 41.4) between two plasma sources (2; 2.1, 2.2, 2.3, 2.4) connected in series, wherein this branching point (41.1, 41.2, 41.3, 41.4) is connected via associated switch valves (L.1 to L.4; M.1 to M.3) to the intake and/or suction side of the at least one pumping station (5, 6).

21. Device according to any of claims 12 to 20, **characterised in that** a starter device (23; 23.1, 23.2, 23.3, 23.4) is connected upstream of a respective plasma source (2; 2.1, 2.2, 2.3, 2.4).

22. Device according to any of claims 12 to 21, **characterised in that** one or more melt traps are provided in the lines (11; 11a, 11b; 12; 12a, 12b; 13) for avoiding the penetration of melt from the plasticising unit into the vacuum unit.

23. Device according to any of claims 12 to 22, **characterised in that** process gases can be fed to at least one or some plasma sources (2; 2.1, 2.2, 2.3, 2.4) via a vortex nozzle or a waveguided nozzle.

24. Device according to any of claims 12 to 23, **characterised in that** the vacuum system (5, 6) comprises at least one vacuum pump, at least one Roots blower and/or at least one screw pump (6).

25. Device according to any of claims 12 to 24, **characterised in that** the switch valves (A.1, A.2, B.1, B.2, C.1, C.2, D.1, D.2, E.1, E.2, F.1, F.2) are in the form of double valves (A.1, A.2, B.1, B.2, C.1, C.2, D.1, D.2, E.1, E.2, F.1, F.2) connected in parallel.

26. Device according to any of claims 12 to 25, **characterised in that** the device is designed without a cold trap.

27. Device according to any of claims 12 to 26, **characterised in that** the plasma source (2; 2.1, 2.2, 2.3, 2.4) is in such a form that the pollutants fed to the plasma source (2; 2.1, 2.2, 2.3, 2.4) can be converted into the plasma state of aggregation to the extent of at least 20%, in particular to the extent of at least 30%, 40%, 50%, 60%, 70%, 80%, or to the extent of at least 90%.

## Revendications

1. Procédé de dégazage de polymères fondus et de neutralisation des substances toxiques en résultant, avec les étapes de procédé suivantes :
- une pression négative ou un vide est généré au moyen d'une installation à vide,
- la pression négative ou le vide est appliqué dans une zone de dégazage dans laquelle est situé le polymère fondu,
- les substances toxiques enlevées ou aspirées à partir de la zone de dégazage (VD ; VD1, VD2) par l'installation de vide sous forme de gaz d'échappement ou de gaz d'échappement et de composants liquides et/ou solides sont séparés dans une étape de filtration suivante et/ou dans un séparateur (4 ; 4.1, 4.2),
- les substances toxiques, après le retrait de la zone de dégazage (VD ; VD1, VD2) sont emmenés vers une source de plasma (2 ; 2.1, 2.2, 2.3, 2.4, qui est construite et/ou conçue de telle manière que les substances toxiques dans la source de plasma (2 ; 2.1, 2.2, 2.3, 2.4) sont totalement ou partiellement transférées dans un état d'agrégat de plasma,
- les substances toxiques sont transférées après le retrait de la zone de dégazage (VD ; VD1, VD2) vers la source de plasma (2 ; 2.1, 2.2, 2.3, 2.4) avant le transfert vers un filtre ou vers un séparateur (4 ; 4.1, 4.2)
- des gaz de procédé, qui comprennent de l'air extérieur, de la vapeur d'eau et/ou du dioxyde de carbone, sont transférés vers les substances toxiques,
**caractérisé par** les nouvelles caractéristiques suivantes :
- les substances toxiques retirées de la zone de dégazage (VD ; VD1, VD2) et transférées vers la source de plasma (2 ; 2.1, 2.2, 2.3, 2.4) sont déplacées plus loin par le biais d'un système de canalisations, lequel est chauffé à au moins 150 °C pour éviter des séparations,
- des sources de plasma (2 ; 2.1, 2.2, 2.3, 2.4) individuelles ou plusieurs sources de plasma sont employées, qui peuvent être activées ou désactivées par le biais de vannes de commutation (A.1, A.2, B.1, B.2, C.1, C.2, D.1, D.2, E.1, E.2, F.1, F.2) prévues dans des canalisations de dégazage (11, 11a, 11b, 12, 12a, 12b, 13), et
- les vannes de commutation (A.1, A.2, B.1, B.2, C.1, C.2, D.1, D.2, E.1, E.2, F.1, F.2) sont placées avant et après les sources de plasma (2 ; 2.1, 2.2, 2.3, 2.4) sous la forme de vannes de commutation (A.1, A.2, B.1, B.2, C.1, C.2, D.1, D.2, E.1, E.2, F.1, F.2) parallèles avec des sections transversales d'écoulement différentes.

2. Procédé selon la revendication 1, **caractérisé en ce que** d'autres gaz de procédé sont transférés de manière complémentaire vers les substances toxiques avant le transfert vers la source de plasma (2 ; 2.1, 2.2, 2.3, 2.4) ou pendant le transfert dans la source de plasma (2 ; 2.1, 2.2, 2.3, 2.4).

3. Procédé selon la revendication 2, **caractérisé en ce que** les produits de procédé transférés vers les substances toxiques comprennent en outre de l'oxygène, de l'azote et/ou de l'argon.

4. Procédé selon l'une des revendications 1 à 3, **caractérisé en ce que** les substances toxiques dans la source de plasma (2; 2.1, 2.2, 2.3, 2.4) sont transférées dans l'état d'agrégat de plasma moyennant un apport d'énergie, créé notamment par une activation thermique, par un rayonnement électromagnétique, y compris un rayonnement laser, par des champs électrostatiques et/ou électromagnétiques, et/ou par des champs alternatifs électriques, par une excitation inductive, et/ou au moyen de micro-ondes.

5. Procédé selon l'une des revendications 1 à 4, **caractérisé en ce que** les produits toxiques transférés hors de la zone dé dégazage (VD ; VD1, VD2) et menés vers la source de plasma (2 ; 2.1, 2.2, 2.3, 2.4) sont déplacés plus loin par le biais d'un système de canalisation, lequel est chauffé à au moins 200 ° C pour éviter des séparations.

6. Procédé selon l'une des revendications 1 à 5, **caractérisé en ce que** les substances toxiques entre la zone dé dégazage (VD ; VD1, VD2) et la source de plasma (2 ; 2.1, 2.2, 2.3, 2.4) sont chauffées jusqu'à une plage de température de 150 °C à 300 °C, notamment de 200 °C à 300 °C.

7. Procédé selon l'une des revendications 1 à 6, **caractérisé en ce que** chaque surface dans le système de vide est chauffée avant la source de plasma, la séparation ou la filtration.

8. Procédé selon l'une des revendications 1 à 7, **caractérisé en ce que** les substances toxiques sont transférées vers plusieurs sources de plasma (2 ; 2.1, 2.2, 2.3, 2.4) branchées les unes derrière les autres pour la création d'un état en forme de plasma.

9. Procédé selon l'une des revendications 1 à 8, **caractérisé en ce que** plusieurs sources de plasma (2 ; 2.1, 2.2, 2.3, 2.4) sont branchées parallèles les unes aux autres afin d'effectuer, pendant le processus en cours, une commutation d'une source de plasma (2 ; 2.1, 2.2, 2.3, 2.4) vers une deuxième source de plasma (2 ; 2.1, 2.2, 2.3, 2.4) en étant séparée.

10. Procédé selon l'une des revendications 1 à 9, **caractérisé en ce que** plusieurs sources de plasma (2 ; 2.1, 2.2, 2.3, 2.4) sont prévues, qui peuvent être activées les unes par rapport aux autres partiellement en série et partiellement en parallèle.

11. Procédé selon l'une des revendications 1 à 10, **caractérisé en ce qu'**une source de plasma (2 ; 2.1, 2.2, 2.3, 2.4) est employée, qui est conçue de telle manière que les substances toxiques y étant sont converties à au moins 20 %, notamment à au moins 30 %, 40 %, 50 %, 60 %, 70 %, ou à au moins 80 %, ou à au moins 90 % dans un état d'agrégat de plasma.

12. Dispositif de dégazage de polymères fondus et de neutralisation des gaz d'échappement y étant créés, avec les caractéristiques suivantes :
- une installation de vide (5, 6) est prévue, par quoi une pression négative ou un vide sont créés,
- un système de conduites et/ou tuyaux est prévu, par quoi la pression négative, et/ou le vide peuvent être menés à une zone de dégazage (VD ; VD1, VD2) pour le dégazage d'un polymère fondu se trouvant dans cette zone de dégazage,
- au moins un stade de filtration et/ou un stade de précipitation (4 ; 4.1, 4.2) sont prévus, par quoi les substances toxiques pouvant être retirées ou aspirées par l'installation de vide à partir de la zone de dégazage (VD ; VD1, VD2) sous forme de gaz d'échappement ou de composants sous forme de gaz, et/ou de liquides, et/ou de solides, peuvent se séparer,
- au moins une source de plasma (2 ; 2.1, 2.2, 2.3, 2.4, dans laquelle les substances toxiques pouvant être retirées de la zone de dégazage (VD ; VD1, VD2) peuvent être amenées dans un état d'agrégat de plasma, est disposée après la zone dé dégazage (VD; VD1, VD2),
- le stade de filtration et/ou de séparation (4 ; 4.1, 4.2) est disposé après la source de plasma (2 ; 2.1, 2.2, 2.3, 2.4),
- le dispositif présente un dispositif de raccordement (N1, N2) logé avant la source de plasma (2 ; 2.1, 2.2, 2.3, 2.4) dans le sens de l'écoulement des gaz d'échappement permettant l'approvisionnement des gaz de procédé,
- une conduite tubulaire ou un récipient permettant l'alimentation des gaz de procédé est placé avant l'au moins un raccordement (N1, N2) pour l'alimentation de gaz de procédé, en particulier, sous forme d'air extérieur, de vapeur d'eau et/ou de dioxyde de carbone,
**caractérisé par** les nouvelles caractéristiques suivantes :
- les conduites menant de la zone de dégazage (VD ; VD1, VD2) à la source de plasma (2 ; 2.1, 2.2, 2.3, 2.4) correspondante ou les tuyaux conduisant les substances toxiques à la source de plasma sont munis d'une isolation thermique et/ou d'un dispositif de chauffage, par quoi le système de tuyauterie est chauffé à au moins 150 °C,
- une ou plusieurs sources de plasma (2 ; 2.1, 2.2, 2.3, 2.4) peuvent être activées ou désactivées par le biais de vannes de commutation (A.1, A.2, B.1, B.2, C.1, C.2, D.1, D.2, E.1, E.2, F.1, F.2) prévues dans des conduites de dégazage (11, 11a, 11b, 12, 12a, 12b, 13), et
- les vannes de commutation (A.1, A.2, B.1, B.2, C.1, C.2, D.1, D.2, E.1, E.2, F.1, F.2) sont branchées avant ou après les sources de plasma (2 ; 2.1, 2.2, 2.3, 2.4) sous la forme de vannes de commutation (A.1, A.2, B.1, B.2, C.1, C.2, D.1, D.2, E.1, E.2, F.1, F.2) parallèles avec des sections transversales du sens d'écoulement différentes.

13. Dispositif selon la revendication 12, **caractérisé en ce qu'**une conduite tubulaire ou un récipient est branché avant l'au moins un raccord (N1, N2) pour une alimentation ultérieure de gaz de procédé sous forme d'oxygène, d'azote et/ou d'argon.

14. Dispositif selon la revendication 12 ou la revendication 13, **caractérisé en ce que** l'au moins une source de plasma (2 ; 2.1, 2.2, 2.3, 2.4) est construite de telle manière que les substances toxiques la traversant peuvent être transférées à l'état d'agrégat de plasma moyennant un apport d'énergie, notamment par l'apport d'une excitation thermique, par un rayonnement électromagnétique, y compris un rayonnement laser, par des champs électrostatiques et/ou électromagnétiques , et/ou des champs alternatifs électriques, par une excitation inductive et/ou au moyen de micro-ondes.

15. Dispositif selon l'une des revendications 12 à 14, **caractérisé en ce que** les conduites menant de la zone de dégazage (VD ; VD1, VD2) jusqu'à la source de plasma (2 ; 2.1, 2.2, 2.3, 2.4) correspondante ou les tuyaux transférant les substances toxiques à la source de plasma sont munis d'une isolation thermique et/ou d'un dispositif de chauffage, par lequel le système de tuyaux est chauffé à au moins 200 °C.

16. Dispositif selon l'une des revendications 12 à 15, **caractérisé en ce que** les conduites ou tuyaux menant de la zone de dégazage (VD ; VD1, VD2) vers l'au moins une source de plasma (2 ; 2.1, 2.2, 2.3, 2.4), traversés par les substances toxiques sont munis et/ou enveloppés avec un système de réchauffage pour le chauffage des tuyaux dans une plage de température d'au moins 150 ° à 300 °, notamment de 200 °C à 300 °C.

17. Dispositif selon l'une des revendications 12 à 16, **caractérisé en ce que** le dispositif est conçu de sorte que chaque surface dans le système de vide est chauffée avant la source de plasma, la séparation ou les filtres.

18. Dispositif selon l'une des revendications 12 à 17, **caractérisé en ce que** plusieurs sources de plasma (2 ; 2.1, 2.2, 2.3, 2.4) branchées en série sont prévues.

19. Dispositif selon l'une des revendications 12 à 18, **caractérisé en ce que** plusieurs sources de plasma (2 ; 2.1, 2.2, 2.3, 2.4) sont branchées en parallèle les unes par rapport aux autres.

20. Dispositif selon l'une des revendications 12 à 19, **caractérisé en ce qu'**à partir d'au moins une conduite et/ou tuyau (11a, 11b; 12a, 12b; 13) avec à l'intérieur l'agencement de sources de plasma (2; 2.1, 2.2, 2.3, 2.4) branchées en série s'étendant entre l'au moins une zone de dégazage (VD ; VD1, VD2) et au moins une station de pompage (5, 6), au moins une conduite (Z2) supplémentaire se subdivise, et en l'occurrence à partir d'un point de dérivation (41.1, 41.2, 41.3, 41.4) entre deux sources de plasma (2 ; 2.1, 2.2, 2.3, 2.4) branchées en série, où ce point de dérivation (41.1, 41.2, 41.3, 41.4) est relié avec le côté entrée et/ou le côté aspiration de l'au moins une station de pompage (5, 6) par le biais de vannes de commutation (L.1 à L.4 ; M.1 à M.3) correspondantes.

21. Dispositif selon l'une des revendications 12 à 20, **caractérisé en ce qu'un** dispositif de démarrage (23 ; 23.1, 23.2, 23.3, 23.4) est branché avant chaque source de plasma (2; 2.1, 2.2, 2.3, 2.4).

22. Dispositif selon l'une des revendications 12 à 21, **caractérisé en ce qu'un** ou deux pièges pour produit fondu sont prévus dans les conduites (11 ; 11a, 11b ; 12 ; 12a, 12b; 13) pour éviter une entrée de produit fondu provenant de l'unité de plastification dans l'unité de vide.

23. Dispositif selon l'une des revendications 12 à 22, **caractérisé en ce que** des gaz de procédé peuvent être alimentés dans au moins une ou quelques sources de plasma (2 ; 2.1, 2.2, 2.3, 2.4) par le biais d'une buse à vortex ou d'une buse à guide d'ondes.

24. Dispositif selon l'une des revendications 12 à 23, **caractérisé en ce que** l'installation de vide (5, 6) comprend au moins une pompe à vide, au moins un compresseur mécanique et/ou au moins une pompe à vis (6).

25. Dispositif selon l'une des revendications 12 à 24, **caractérisé en ce que** les vannes de commutation (A.1, A.2, B.1, B.2, C.1, C.2, D.1, D.2, E.1, E.2, F.1, F.2) sont conçues comme des vannes doubles (A.1, A.2, B.1, B.2, C.1, C.2, D.1, D.2, E.1, E.2, F.1, F.2) branchées en parallèle.

26. Dispositif selon l'une est conçu des revendications 12 à 25, **caractérisé en ce que** le dispositif (23 ; 23.1, 23.2, 23.3, 23.4) est conçu sans piège à froid.

27. Dispositif selon l'une des revendications 12 à 26, **caractérisé en ce que** la source de plasma (2 ; 2.1, 2.2, 2.3, 2.4) est conçue de telle manière que les substances toxiques menées jusqu'à la source de plasma (2 ; 2.1, 2.2, 2.3, 2.4) peuvent être transférées à l'état d'agrégat de plasma à raison d'au moins 20 %, notamment d'au moins 30 %, 40 %, 50 %, 60 %, 70 %, 80 % ou d'au moins 90 %.
